# EUROPEAN PATENT APPLICATION

(11) **EP 4 395 361 A1**
(43) Date of publication of application: **03.07.2024**
(21) Application number: 22861305.5
(22) Date of filing: 22.08.2022
(51) Int. Cl.: H04N 25/76, H04N 25/74

(54) **IMAGING ELEMENT AND IMAGING DEVICE**

(30) Priority: 25.08.2021 JP 2021137559
(71) Applicant: NIKON CORPORATION, Minato-ku Tokyo 108-6290 (JP)
(72) Inventor: HIRATA, Tomoki, Tokyo 108-6290 (JP)
(74) Representative: Hoffmann Eitle
(86) International application number: PCT/JP2022/031546
(87) International publication number: WO 2023/027017

(57) **Abstract**

An imaging element includes a first semiconductor substrate having a plurality of pixels arranged in a row direction and a second semiconductor substrate having a first load current source configured to supply a current to a first pixel among the plurality of pixels, a second load current source configured to supply a current to a second pixel among the plurality of pixels, a first pixel control unit configured to control supply of the current to the first pixel by the first load current source, and a second pixel control unit configured to control supply of the current to the second pixel by the second load current source.

## Description

### CLAIM OF PRIORITY

The present application claims priority from Japanese patent application No. 2021-137559 filed on August 25, 2021, the content of which is hereby incorporated by reference into this application.

### TECHNICAL FIELD

The present invention relates to an imaging element and an imaging apparatus.

Imaging elements in which a plurality of pixels are arranged in two dimensions in the row direction and the column direction are well-known (e.g., Patent Document 1). An increase in power consumption by imaging elements has been a problem.

### Related Art Documents

### Patent Documents

Patent Document 1: JP 2013-162148 A

### SUMMARY

A first disclosure of an imaging element includes a first semiconductor substrate having a plurality of pixels arranged in a row direction and a second semiconductor substrate having a first load current source configured to supply a current to a first pixel among the plurality of pixels, a second load current source configured to supply a current to a second pixel among the plurality of pixels, a first pixel control unit configured to control supply of the current to the first pixel by the first load current source, and a second pixel control unit configured to control supply of the current to the second pixel by the second load current source.

A second disclosure of an imaging device includes the first disclosure of an imaging element.

### BRIEF DESCRIPTION OF THE DRAWINGS

FIG. 1 is an exploded perspective view showing an example of an imaging element.
FIG. 2 is a descriptive view showing an example of a specific configuration of the pixel unit.
FIG. 3 is a circuit diagram showing an example of a circuit configuration of the pixel.
FIG. 4 is a descriptive view showing an example of a specific configuration of the control circuit unit.
FIG. 5 is a descriptive view showing an example of an internal configuration of the control block.
FIG. 6 is a descriptive view showing a transmission example for signals between the first semiconductor substrate and the second semiconductor substrate 120 in the imaging element.
FIG. 7 is a descriptive view showing an example of an X-Z cross section of the imaging element according to the present embodiment.
FIG. 8 is a timing chart showing an imaging operation example 1 of the imaging element.
FIG. 9 is a timing chart showing an imaging operation example 2 of the imaging element.
FIG. 10 is a timing chart showing an imaging operation of an imaging element according to a comparison example.
FIG. 11 is a descriptive view showing an example of a subject captured by the imaging element.
FIG. 12 is a timing chart showing the exposure times for the regions 1 to 5 shown in FIG. 11.
FIG. 13 is a plan view showing an example of a layout of the plurality of control blocks.
FIG. 14 is a circuit diagram showing another example of a circuit configuration of the pixel.
FIG. 15 is a timing chart showing an imaging operation example 3 of the imaging element.
FIG. 16 is an exploded perspective view showing another example of an imaging element.
FIG. 17 is a descriptive view showing another example of a specific configuration of the control circuit unit.
FIG. 18 is a descriptive view showing a connective relationship between the first semiconductor substrate and the second semiconductor substrate in the imaging element.
FIG. 19 is a descriptive view showing a transmission example for signals between the first semiconductor substrate and the second semiconductor substrate in the imaging element.
FIG. 20 is a descriptive view showing a connective relationship between ADC units and pixel blocks.
FIG. 21 is a timing chart showing an imaging operation in the pixel block of the imaging element.
FIG. 22 is a descriptive diagram showing an example of an exposure timing of each pixel block.
FIG. 23 is a block diagram showing a configuration example of an autonomous exposure control mode 1.
FIG. 24 is a block diagram showing a configuration example of an autonomous exposure control mode 2.
FIG. 25 is a block diagram showing a configuration example of an autonomous exposure control mode 3.
FIG. 26 is a descriptive view showing a circuit configuration example of the interior of the control block.
FIG. 27 is a descriptive view showing a circuit operation stoppage example 1 at the level of the control block.
FIG. 28 is a descriptive view showing a circuit operation stoppage example 2 at the level of the control block.
FIG. 29 is a descriptive view showing a circuit operation stoppage example 3 at the level of the control block.
FIG. 30 is a truth table of the NAND circuit.
FIG. 31 is a block diagram showing a configuration example of an imaging device according to an embodiment.

### DETAILED DESCRIPTION OF EMBODIMENTS

The present invention will be described below with embodiments of the invention, but the embodiments below do not limit the invention according to the claims. Also, not all combinations of characteristics described in the embodiments are necessarily required as a solution provided by the invention.

In this specification, the X axis and the Y axis are perpendicular to each other, and the Z axis is perpendicular to the XY plane. The X, Y, and Z axes constitute a right hand system. The direction parallel to the Z axis is sometimes referred to as the lamination direction of an imaging element 100. In this specification, terms such as "up" or "down" are not limited to being in reference to the direction of gravitational force. Such terms merely indicate the direction relative to the Z axis direction. In this specification, arrays in the X axis direction are referred to as "rows" and arrays in the Y axis direction are referred to as "columns" but the row and column directions are not limited thereto.

### <Configuration of Imaging Element>

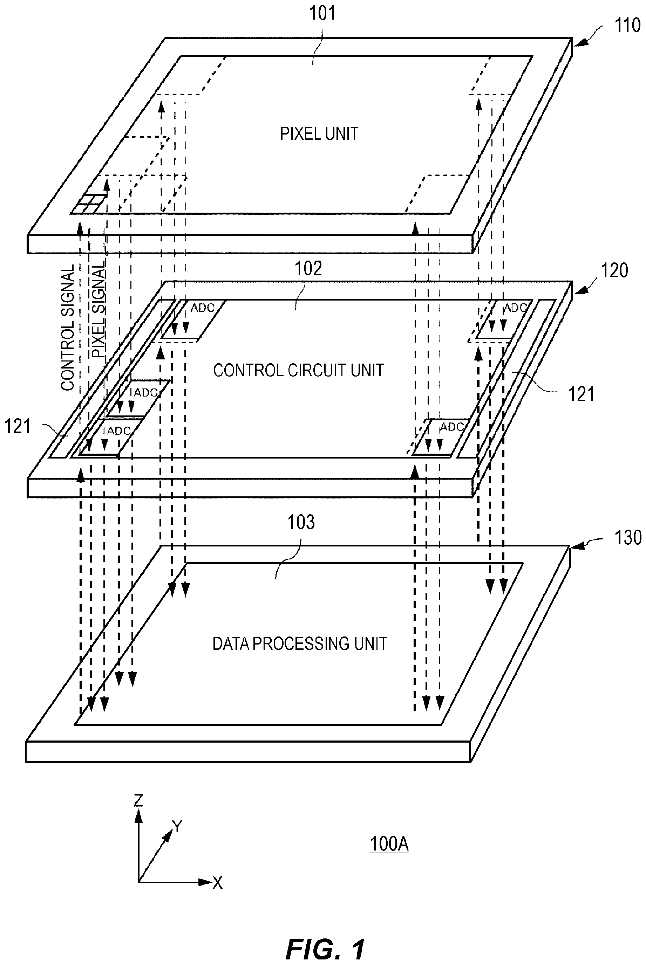

First, a configuration of the imaging element will be described with reference to FIGs. 1 to 22. The imaging element may be of a back-illuminated type or a front-illuminated type.

FIG. 1 is an exploded perspective view showing an example of an imaging element 100A. The imaging element 100A captures subjects. The imaging element 100A generates image data of the captured subject. The imaging element 100A includes a first semiconductor substrate 110, a second semiconductor substrate 120, and a third semiconductor substrate 130. As shown in FIG. 1, the first semiconductor substrate 110 is stacked on the second semiconductor substrate 120, and the second semiconductor substrate 120 is stacked on the third semiconductor substrate 130.

The first semiconductor substrate 110 has a pixel unit 101. The pixel unit 101 outputs pixel signals based on incident light.

The second semiconductor substrate 120 has a control circuit unit 102 and peripheral circuit units 121.

The control circuit unit 102 receives input of the pixel signals outputted from the first semiconductor substrate 110. The control circuit unit 102 processes the inputted pixel signals. The control circuit unit 102 is disposed at a position in the second semiconductor substrate 120 opposing the pixel unit 101. The control circuit unit 102 is disposed so as to overlap the pixel unit 101 in the direction in which the first semiconductor substrate 110 and the second semiconductor substrate 120 are stacked, for example. The control circuit unit 102 may output, to the pixel unit 101, a control signal for controlling the driving of the pixel unit 101.

The peripheral circuit units 121 control the driving of the control circuit unit 102. The peripheral circuit units 121 are disposed on the second semiconductor substrate 120 at positions in the periphery of the control circuit unit 102. Specifically, the peripheral circuit units 121 are disposed on the second semiconductor substrate 120 at regions arranged outside of the region where the control circuit unit 102 is disposed. Also, the peripheral circuit units 121 may be electrically connected to the first semiconductor substrate 110 and control the driving of the pixel unit 101. The peripheral circuit units 121 are disposed along two sides of the second semiconductor substrate 120, but the method for arranging the peripheral circuit units 121 is not limited to this example.

The third semiconductor substrate 130 has a data processing unit 103. The data processing unit 103 uses digital data outputted from the second semiconductor substrate 120 to perform addition, thinning, and other types of image processing.

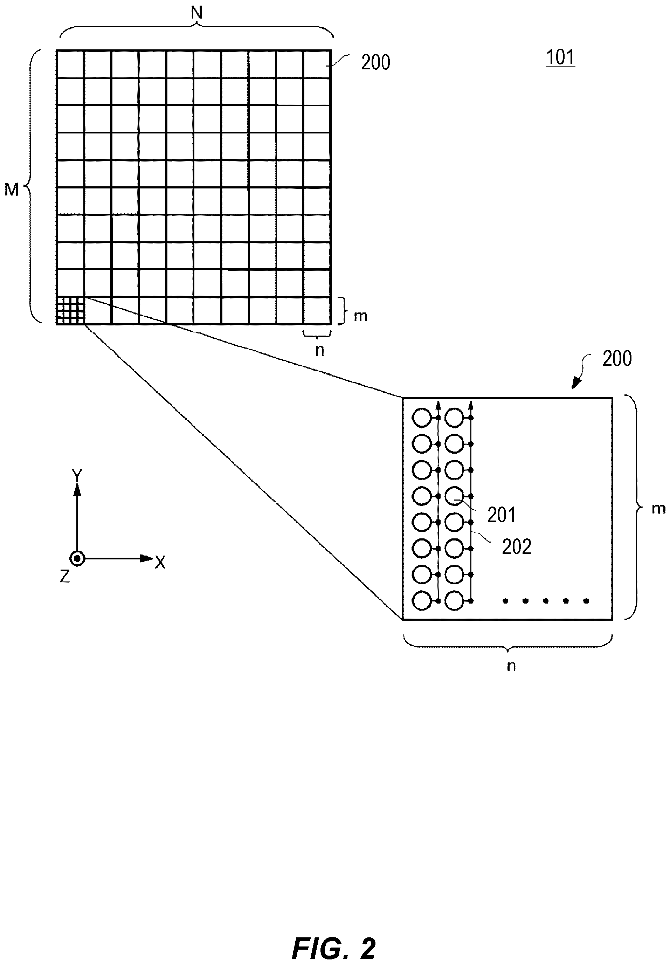

FIG. 2 is a descriptive view showing an example of a specific configuration of the pixel unit 101. The pixel unit 101 has a plurality of pixel blocks 200. The plurality of pixel blocks 200 are arranged in the row direction and the column direction of the pixel unit 101. Specifically, the plurality of pixel blocks 200 include M×N pixel blocks 200 (M and N being natural numbers) that are arranged in the row direction and the column direction of the pixel unit 101. In the example illustrated, M and N are equal, but M and N may differ from each other.

The pixel blocks 200 each have a plurality of pixels 201. The plurality of pixels 201 are arranged in the row direction and the column direction of the pixel block 200. The pixel blocks 200 include m×n pixels 201 (m and n being natural numbers) that are arranged in the row direction and the column direction. The pixel blocks 200 each include 16×16 pixels 201 that are arranged in the row direction and the column direction, for example. The number of pixels 201 per pixel block 200 is not limited thereto. In the example illustrated, m and n are equal, but m and n may differ from each other.

The pixel blocks 200 have the plurality of pixels 201, which are connected to the same control line (e.g., transfer control line 311, discharge control line 312 to be described later) in the row direction. The pixels 201 of the pixel blocks 200 are connected to the same control line so as to have set thereto the same exposure time. Specifically, for example, n pixels 201 arranged in the row direction are connected to the same control line.

Meanwhile, among different pixel blocks 200, one pixel block 200 may be set to a different exposure time than another pixel block 200. If, for example, one pixel block 200 and another pixel block 200 are arranged in the row direction, then the plurality of pixels 201 of the one pixel block 200 are connected to different control lines than the plurality of pixels 201 of the other pixel block 200. The plurality of pixels 201 in the mth row of the one pixel block 200 are all connected to a different control line than the control line to which the plurality of pixels 201 in the mth row of the other pixel block 200 are connected. Also, if one pixel block 200 and another pixel block 200 are arranged in the column direction, then the plurality of pixels 201 of the one pixel block 200 are connected to different control lines than the plurality of pixels 201 of the other pixel block 200. The plurality of pixels 201 in the mth row of the one pixel block 200 are all connected to a different control line than the control line to which the plurality of pixels 201 in the mth row of the other pixel block 200 are connected.

Also, if one pixel block 200 and another pixel block 200 are arranged in the row direction, for example, then the plurality of pixels 201 of the one pixel block 200 are connected to different signal lines 202 than the plurality of pixels 201 of the other pixel block 200. The plurality of pixels 201 in the nth column of the one pixel block 200 are all connected to a different signal line 202 than the signal line 202 to which the plurality of pixels 201 in the nth column of the other pixel block 200 are connected. Also, if one pixel block 200 and another pixel block 200 are arranged in the column direction, then the plurality of pixels 201 of the one pixel block 200 are connected to different signal lines 202 than the plurality of pixels 201 of the other pixel block 200. The plurality of pixels 201 in the nth column of the one pixel block 200 are all connected to a different signal line 202 than the signal line 202 to which the plurality of pixels 201 in the nth column of the other pixel block 200 are connected.

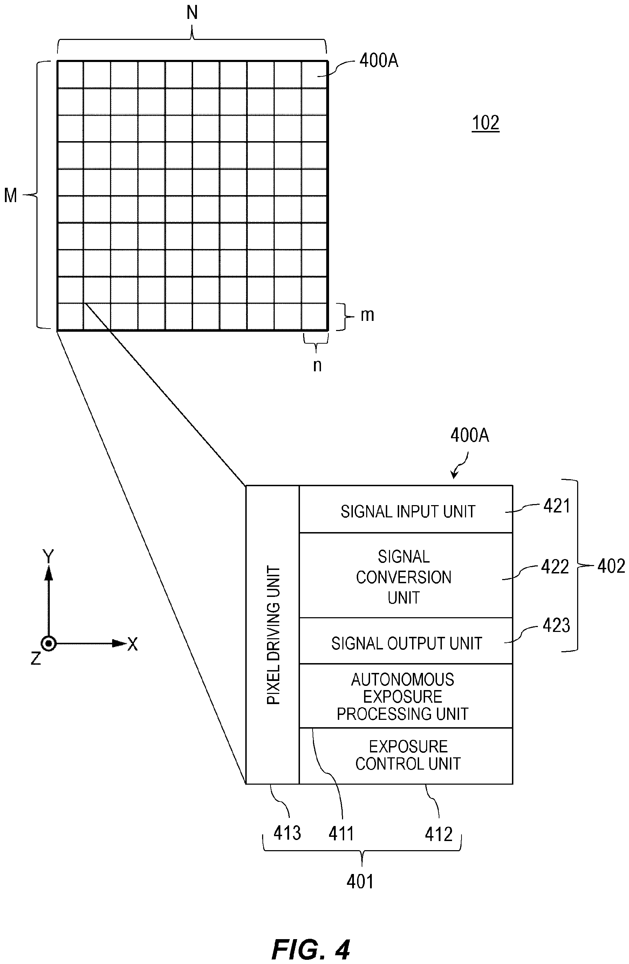

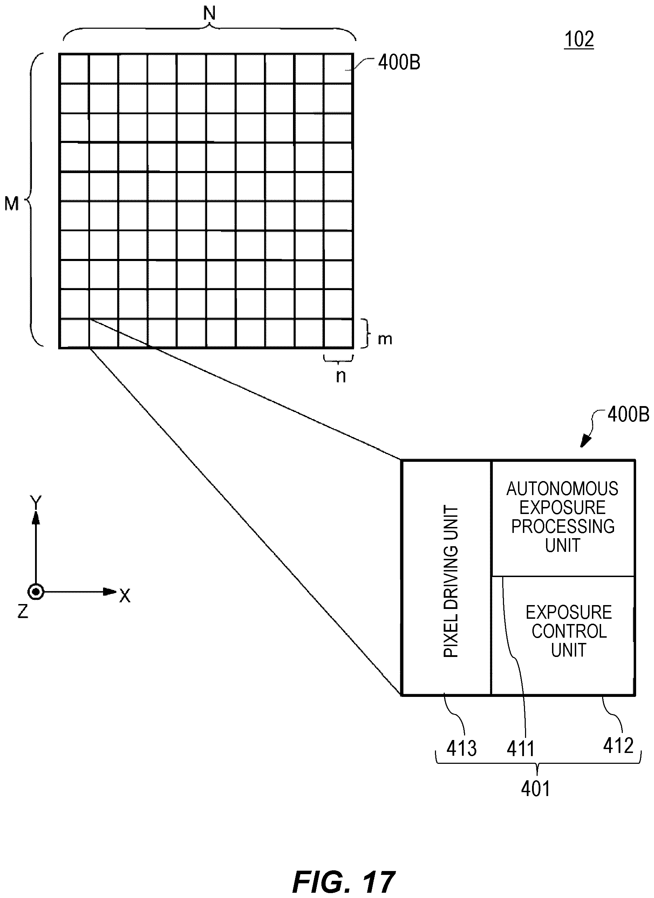

The pixel blocks 200 are disposed so as to correspond to control blocks 400A or 400B (see FIGs. 4 and 17) to be described later. That is, one pixel block 200 is arranged for each control block 400A or 400B.

Alternatively, a plurality of pixel blocks 200 may be arranged for each control block 400A or 400B. Even if a plurality of pixel blocks 200 are arranged for each control block 400A or 400B, different exposure times may be set for the respective pixel blocks 200. If two pixel blocks 200 arranged in the column direction are provided for each control block, then the control block 400A or 400B controls 2m×n pixels 201. Specifically, for example, the control block 400A or 400B controls 32×16 pixels 201. The number of pixels 201 per control block 400A or 400B is not limited thereto.

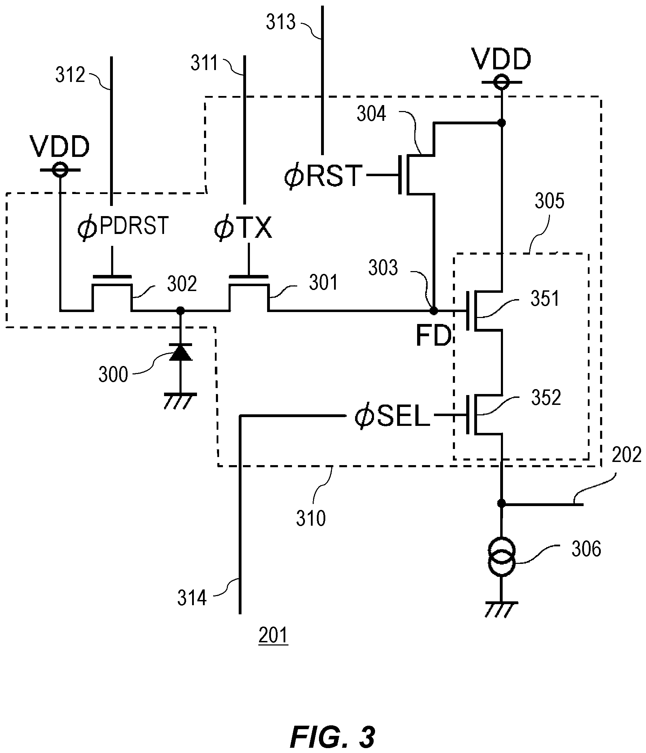

FIG. 3 is a circuit diagram showing an example of a circuit configuration of the pixel 201. The pixel 201 includes a photoelectric conversion unit 300 and a read unit 310. The read unit 310 has a transfer unit 301, a discharge unit 302, a floating diffusion (FD) 303, a reset unit 304, and a pixel output unit 305, and reads a pixel signal based on an electric charge yielded by conversion by the photoelectric conversion unit 300 to the signal line 202. The pixel output unit 305 has an amplification unit 351 and a selection unit 352. The transfer unit 301, the discharge unit 302, the FD 303, the reset unit 304, the amplification unit 351, and the selection unit 352 are collectively referred to as the read unit 310. The read unit 310 is described as an N-channel FET, but the transistor type is not limited thereto.

The photoelectric conversion unit 300 has a photoelectric conversion function for converting light to electric charge. The photoelectric conversion unit 300 accumulates an electric charge yielded by photoelectric conversion. The photoelectric conversion unit 300 is constituted of a photodiode, for example.

The transfer unit 301 transfers the electric charge of the photoelectric conversion unit 300 to the FD 303. The transfer unit 301 controls the electric connection between the photoelectric conversion unit 300 and the FD 303. The transfer unit 301 is constituted of a transistor, for example. The transfer unit 301 has at least a gate terminal, and may be an element constituting a portion of a transistor where a portion of the photoelectric conversion unit 300 serves as the source terminal and a portion of the FD 303 serves as the drain terminal. The gate terminal of the transfer unit 301 is connected to a transfer control line 311 for receiving input of a transfer control signal ϕTX. The transfer control line 311 will be described later.

The discharge unit 302 discharges the electric charge accumulated in the photoelectric conversion unit 300 to a power source line to which a power source voltage VDD is supplied. The discharge unit 302 controls the connection between the photoelectric conversion unit 300 and the power source line. The discharge unit 302 is constituted of a transistor, for example. The discharge unit 302 has at least a gate terminal, and may be an element constituting a portion of a transistor where a portion of the photoelectric conversion unit 300 serves as the source terminal and a portion of a diffusion region connected to the power source line serves as the drain terminal. The gate terminal of the discharge unit 302 is connected to a discharge control line 312 for receiving input of a discharge control signal cpPDRST. The discharge unit 302 has been described as discharging the electric charge of the photoelectric conversion unit 300 to the power source line to which the power source voltage VDD is supplied, but may instead discharge the electric charge to a power source line to which a power source voltage differing from the power source voltage VDD is supplied.

The FD 303 is transferred from the transfer unit 301 to the photoelectric conversion unit 300. The FD 303 accumulates the electric charge transferred from the photoelectric conversion unit 300.

The reset unit 304 discharges the electric charge accumulated in the FD 303 to the power source line to which the power source voltage VDD is supplied. The reset unit 304 resets the potential of the FD 303 to the power source voltage VDD, which is the reference potential. The reset unit 304 controls the electric connection between FD 303 and the power source line. The reset unit 304 is constituted of a transistor, for example. The reset unit 304 has at least a gate terminal, and may be an element constituting a portion of a transistor where a portion of the FD 303 serves as the source terminal and a portion of a diffusion region connected to the power source line serves as the drain terminal. The gate terminal of the reset unit 304 is connected to a reset control line 313 for receiving input of a reset control signal ϕRST. The reset control line 313 will be described later.

The pixel output unit 305 outputs a pixel signal based on the potential of the FD 303 to the signal line 202. The pixel output unit 305 has an amplification unit 351 and a selection unit 352. The amplification unit 351 is constituted of a transistor. In the amplification unit 351, the gate terminal is connected to the FD 303, the drain terminal is connected to the power source line to which the power source voltage VDD is supplied, and the source terminal is connected to the drain terminal of the selection unit 352.

The selection unit 352 controls the electric connection between the pixel 201 and the signal line 202. When the selection unit 352 causes the pixel 201 to be connected to the signal line 202, the pixel signal is outputted from the pixel 201 to the signal line 202. The selection unit 352 is constituted of a transistor. The selection unit 352 has at least a gate terminal, and may be an element constituting a portion of a transistor where a portion of the amplification unit 351 serves as the source terminal and a portion of a diffusion region connected to the signal line 202 serves as the drain terminal. The gate terminal of the selection unit 352 is connected to a selection control line 314 for receiving input of a selection control signal cpSEL and that spans a plurality of pixel blocks 200. The source terminal of the selection unit 352 is connected to a load current source 306.

The load current source 306 is connected to the signal line 202 and supplies a current for reading the pixel signal from the pixel 201. As a result, it is possible to stabilize the operation of the amplification unit 351. Also, the load current source 306 is connected to the signal line 202. The load current source 306 may be provided to the first semiconductor substrate 110 or to the second semiconductor substrate 120.

Also, the FD 303 may share the pixel output unit 305 with another pixel 201. The FD 303 and the pixel output unit 305 may be shared among a plurality of pixels 201 arranged in the row direction or the column direction, for example. Also, the pixel 201 may be constituted of a plurality of photoelectric conversion units 300 and the transfer unit 301.

FIG. 4 is a descriptive view showing an example of a specific configuration of the control circuit unit 102. The control circuit unit 102 has a plurality of control blocks 400A. The plurality of control blocks 400A are arranged in the row direction and the column direction of the control circuit unit 102. Specifically, the control circuit unit 102 has M×N control blocks 400A. If one pixel block 200 is arranged for each control block 400A, the control circuit unit 102 has the control block 400A directly below the pixel block 200. The one pixel block 200 and the one control block 400A are the same shape and size. Also, if a plurality of pixel blocks 200 aligned in the column direction are arranged for each control block 400A, the control circuit unit 102 has one control block 400A directly below the plurality of pixel blocks 200 arranged in the column direction.

The control block 400A is provided so as to correspond to the pixel block 200. As one example of the relationship between the control block and the pixel block, the control block 400A is disposed directly below the pixel block 200 in the direction in which the first semiconductor substrate 110 and the second semiconductor substrate 120 are stacked (lamination direction), for example. Also, the control block 400A is electrically connected to the pixel block 200 via the signal line 202, the transfer control line 311, and the discharge control line 312. Specifically, the control block 400A positioned directly below the pixel block 200 in the lamination direction is electrically connected to the pixel block 200 directly thereabove (hereinafter referred to as the corresponding pixel block 200) via local control lines such as the transfer control line 311 and the discharge control line 312. Also, the control block 400A receives input of the pixel signal outputted from the pixel 201 of the corresponding pixel block 200 via the signal line 202.

The control block 400A controls the driving of the corresponding pixel block 200. The control block 400A controls the exposure time of the pixel 201 included in the corresponding pixel block 200, for example. Also, the control block 400A has a signal processing unit 402 that processes the inputted signal and processes the pixel signal outputted from the pixel 201 included in the corresponding pixel block 200. The control block 400A converts the analog pixel signal outputted from the pixel 201 included in the corresponding pixel block 200 to a digital signal, for example.

The control block 400A has a pixel control unit 401 and the signal processing unit 402. The pixel control unit 401 has an autonomous exposure processing unit 411, an exposure control unit 412, and a pixel driving unit 413, and controls the pixels 201 of the pixel unit 101. The signal processing unit 402 has a signal input unit 421, a signal conversion unit 422, and a signal output unit 423, converts the analog pixel signals from the pixel unit 101 into digital signals, and transfers the resultant digital signals to the pixel control unit 401 and the data processing unit 103.

The autonomous exposure processing unit 411 is a circuit that calculates the exposure time of the pixels 201 included in the corresponding pixel block 200 on the basis of the pixel signals converted to digital signals by the signal processing unit 402. Details regarding the autonomous exposure processing unit 411 will be described later.

The exposure control unit 412 is a circuit that controls the exposure of the pixels 201 included in the corresponding pixel block 200 on the basis of the exposure time calculated by the autonomous exposure processing unit 411. Specifically, the exposure control unit 412 generates a control signal for controlling the exposure time of the pixels 201 included in the corresponding pixel block 200 (the charge accumulation time of the photoelectric conversion unit 300). The exposure control unit 412 adjusts the start timing or the end timing for exposure of the pixels 201 included in the corresponding pixel block 200 to control the exposure time of each pixel block 200, for example. The exposure control unit 412 is provided so as to be elongated in the row direction in the control block 400A.

The pixel driving unit 413 outputs the control signal generated by the exposure control unit 412 to the pixels 201 included in the corresponding pixel block 200. The pixel driving unit 413 is a driver circuit that drives the pixels 201 included in the corresponding pixel block 200. The pixel driving unit 413 drives the pixels 201 of a selected pixel row among the pixels 201 included in the corresponding pixel block 200. The pixel driving unit 413 is provided so as to extend in the column direction. As a result, the pixel driving unit 413 is disposed at a position corresponding to m pixels 201 arranged in the column direction. The autonomous exposure processing unit 411, the exposure control unit 412, and the pixel driving unit 413 are arranged in an L-shape in the control block 400A, where the pixel driving unit 413 extends in the column direction, and the autonomous exposure processing unit 411 and the exposure control unit 412 extend in the row direction.

The signal input unit 421 receives input of pixel signals outputted from the pixels 201 included in the corresponding pixel block 200. The signal input unit 421 outputs the inputted pixel signals to the signal conversion unit 422. The signal input unit 421 may be provided for each of the n pixels 201 arranged in the row direction in the corresponding pixel block 200. The signal input unit 421 may have a processing circuit that performs signal processing such as noise removal on the pixel signals outputted from the first semiconductor substrate 110. Also, the signal input unit 421 may have a voltage adjustment circuit that adjusts the voltage of the signal line 202 connected to the pixels 201 included in the corresponding pixel block 200 so as not to reach a prescribed value or less. If disposed on the second semiconductor substrate, the load current source 306 may be disposed in the signal input unit 421 included in the corresponding control block 400A.

The signal conversion unit 422 converts the pixel signals outputted from the signal input unit 421 into digital signals. The signal conversion unit 422 sequentially converts the pixel signals outputted respectively from the m pixels 201 arranged in the column direction in the corresponding pixel block 200 into digital signals. The signal conversion unit 422 converts, in a parallel fashion, the pixel signals outputted from the pixels 201 arranged in n columns in the row direction of the corresponding pixel block 200 into digital signals.

The signal output unit 423 stores the pixel signals converted by the signal conversion unit 422 into digital signals. The signal output unit 423 may have a latch circuit for storing the digital signals. The signal output unit 423 is disposed between the signal conversion unit 422 and the autonomous exposure processing unit 411 in the column direction. The signal output unit 423 outputs the pixel signals converted into digital signals to the outside of the control circuit unit 102. The signal output unit 423 is provided so as to extend in the row direction of the control block 400A. The signal output unit 423 is disposed between the signal conversion unit 422 and the autonomous exposure processing unit 411 in the column direction.

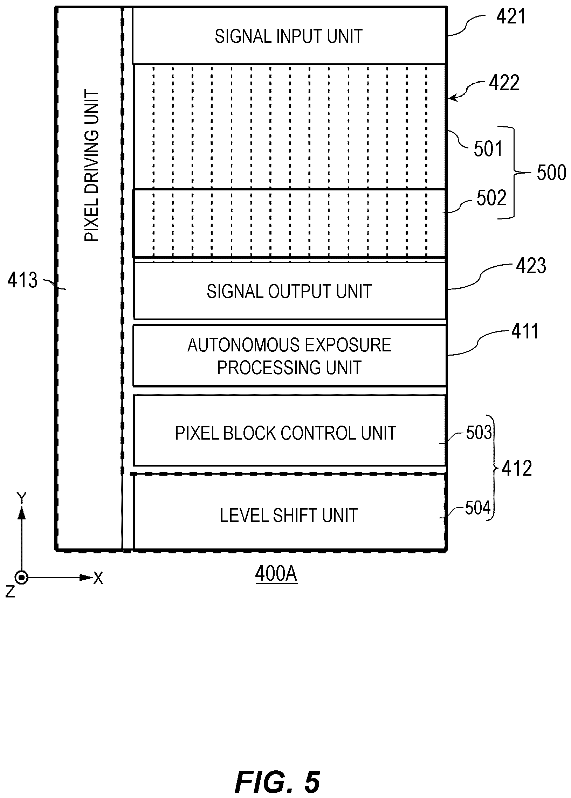

FIG. 5 is a descriptive view showing an example of an internal configuration of the control block 400A. The signal conversion unit 422 includes n comparators 501 and n storage units 502. The exposure control unit 412 includes a pixel block control unit 503 and a level shift unit 504. A combination of one comparator 501 and a storage unit 502 connected to the comparator 501 constitutes one analog-to-digital converter (ADC) 500.

The comparator 501 is provided so as to extend in the column direction of the control block 400A. The n comparators 501 are arranged in the row direction. The comparators 501 are arranged for each of the m pixels 201 arranged in the column direction in the corresponding pixel block 200. The comparators 501 sequentially read the pixel signals of the m pixels 201 arranged in the column direction in the corresponding pixel block 200 and convert the pixel signals into digital signals.

The storage unit 502 stores the pixel signals converted into digital signals by using the comparator 501. The storage unit 502 is provided in the signal conversion unit 422 on the load side further in the Y axis direction than the comparator 501. The storage unit 502 has a latch circuit, for example. The storage unit 502 may have a memory constituted of an SRAM or the like.

The pixel block control unit 503 controls the operation of the transfer units 301 and the discharge units 302 of the pixels 201 included in the corresponding pixel block 200. Specifically, the pixel block control unit 503 outputs the transfer control signal ϕTX for controlling the transfer units 301 of the pixels 201 included in the corresponding pixel block 200 and the discharge control signal ϕPDRST for controlling the discharge units 302 of the pixels 201 included in the corresponding pixel block 200. The pixel block control unit 503 is provided so as to extend in the row direction in the control block 400A. The pixel block control unit 503 is disposed between the level shift unit 504 and the autonomous exposure processing unit 411 in the column direction.

The level shift unit 504 adjusts the voltage level of the control signals outputted from the pixel block control unit 503. Specifically, the level shift unit 504 raises the voltage level of the transfer control signal ϕTX outputted from the pixel block control unit 503. Also, the level shift unit 504 raises the voltage level of the discharge control signal ϕPDRST outputted from the pixel block control unit 503.

The transfer unit 301 receives, via the transfer control line 311, input of the transfer control signal ϕTX, the voltage of which was raised by the pixel block control unit 503. Also, the discharge unit 302 receives, via the discharge control line 312, the discharge control signal cpPDRST, the voltage of which was raised by the pixel block control unit 503.

In this manner, the pixel block control unit 503 raises the voltages of the transfer control signal ϕTX and the discharge control signal cpPDRST so as to reach voltage levels used by the transfer units 301 and the discharge units 302 of the read units 310 of the pixels 201. The level shift unit 504 is provided so as to extend in the row direction of the control block 400A.

The level shift unit 504 is provided further to the outer periphery of the control block 400A than the pixel block control unit 503. The edge on the positive side in the X axis direction of the level shift unit 504 and the edge on the negative side in the Y axis direction are positioned furthest to the outside of the control block 400A. The edge on the negative side in the X axis direction of the level shift unit 504 is in contact with the pixel driving unit 413.

The level shift unit 504 and the pixel driving unit 413 handle the signals subjected to level shifting. Meanwhile, the autonomous exposure processing unit 411, the pixel block control unit 503, the level shift unit 504, and the pixel driving unit 413 handle pixel signals outputted from the first semiconductor substrate 110.

Here, the components of the control block 400A are formed in well regions provided in the second semiconductor substrate 120. The well regions are provided separately according to the voltage level of the signal handled. The well regions are divided by whether the power source used thereby is a digital power source or an analog power source. Also, even if the signal conversion unit 422 uses the same analog power source, the signal conversion unit 422 is sometimes separated from regions that use another analog power source from the perspective of noise prevention. The separation of the well regions requires a well separation region with a gap based on manufacturing process rules.

The control block 400A separates the well region forming the level shift unit 504 and the pixel driving unit 413 from other well regions. The level shift unit 504 and the pixel driving unit 413 are arranged in an L shape, for example, thereby enabling the sharing of a well region between the level shift unit 504 and the pixel driving unit 413. As a result of sharing the well region, it is possible to omit a well separation region, thereby improving layout efficiency.

The L-shaped pixel control unit 401 constitutes a portion of the outer periphery of the control block 400A. As a result, it is possible to share a well region with another control block 400A that is adjacent thereto in the row direction and the column direction.

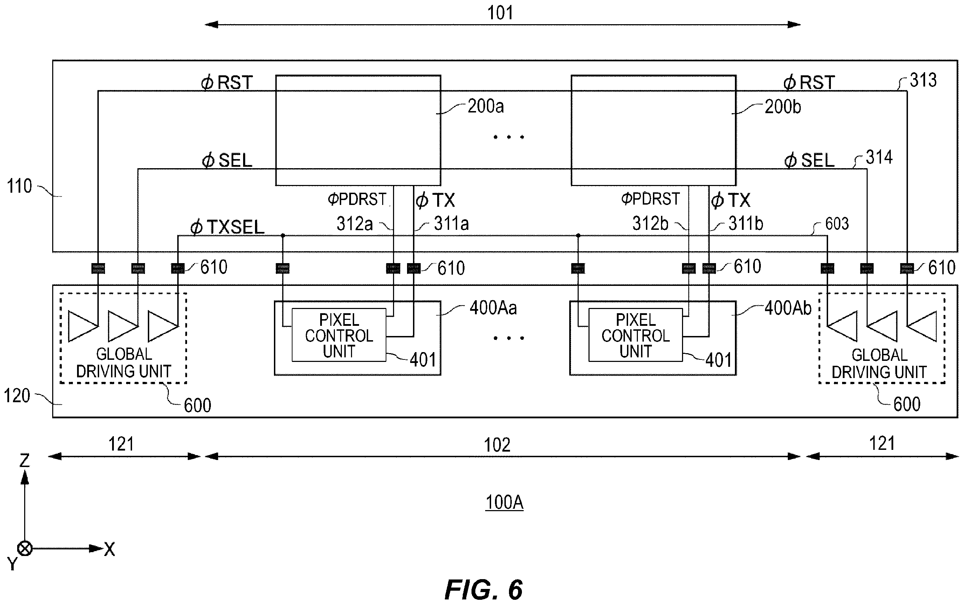

FIG. 6 is a descriptive view showing a transmission example for signals between the first semiconductor substrate 110 and the second semiconductor substrate 120 in the imaging element 100A. Global driving units 600 are provided at the peripheral circuit units 121 that sandwich the control circuit unit 102 from both ends thereof.

A transfer control line 311a and a discharge control line 312a are respectively connected to the pixels 201 included in a pixel block 200a. The transfer control line 311a is connected to the gate terminals of the transfer units 301 of the pixels 201 included in the pixel block 200a, and the discharge control line 312a is connected to the gate terminals of the discharge control line 302 of the pixels 201 included in the pixel block 200a. The transfer control line 311a supplies the transfer control signal ϕTX outputted from a control block 400Aa to the transfer units 301 of the pixels 201 included in the pixel block 200a. The discharge control line 312a supplies the discharge control signal cpPDRST outputted from the control block 400Aa to the discharge units 302 of the pixels 201 included in the pixel block 200a.

Similarly, a transfer control line 311b and a discharge control line 312b are respectively connected to the pixels 201 included in a pixel block 200b. The transfer control line 311b is connected to the gate terminals of the transfer units 301 of the pixels 201 included in the pixel block 200b, and the discharge control line 312b is connected to the gate terminals of the discharge control line 302 of the pixels 201 included in the pixel block 200b. The transfer control line 311b supplies the transfer control signal ϕTX outputted from a control block 400Ab to the transfer units 301 of the pixels 201 included in the pixel block 200b. The discharge control line 312b supplies the discharge control signal cpPDRST outputted from the control block 400Ab to the discharge units 302 of the pixels 201 included in the pixel block 200b.

If not distinguishing between the transfer control lines 311a and 311b, the transfer control lines are collectively referred to as the transfer control lines 311. If not distinguishing between the discharge control lines 312a and 312b, the discharge control lines are collectively referred to as the discharge control lines 312.

The transfer control lines 311 and the discharge control lines 312 are examples of local control lines connected to first pixels of the pixel block 200. The transfer control lines 311 and the discharge control lines 312 are connected to the same n pixels 201 arranged in the row direction in the pixel block 200.

The global driving unit 600 outputs a reset control signal ϕRST, a selection control signal cpSEL, and a transfer selection control signal cpTXSEL. The global driving unit 600 is connected to the reset control line 313, the selection control line 314, and a transfer selection control line 603 that output control signals to the respective pixel blocks 200.

The global driving unit 600 supplies the reset control signal ϕRST and the selection control signal ϕSEL to the plurality of pixel blocks 200 via the reset control line 313 and the selection control line 314. The global driving unit 600 supplies the transfer selection control signal cpTXSEL to the plurality of control blocks 400A via the transfer selection control line 603.

The transfer selection control signal cpTXSEL is supplied from the global driving unit 600 to the control block 400A in order to control the exposure time for each pixel block 200. The control block 400A to which the transfer selection control signal cpTXSEL was supplied outputs the transfer selection control signal cpTXSEL to the corresponding pixel block 200. The control block 400A determines whether to input, to the pixels 201, the transfer selection control signal cpTXSEL as the transfer control signal ϕTX or the discharge control signal cpPDRST. As a result, the input of the transfer control signal ϕTX or the discharge control signal cpPDRST to the pixels 201 is skipped.

If the transfer control signal ϕTX determines the end time for exposure, for example, then the control block 400A extends the exposure time by skipping the transfer control signal ϕTX. If the transfer control signal ϕTX determines the start time for exposure, then the control block 400A can shorten the exposure time by skipping the transfer control signal ϕTX. In this manner, the transfer selection control signal cpTXSEL can be used to adjust the exposure time of the pixel block 200. This similar applies to cases in which the discharge control signal cpPDRST determines the start time or the end time for exposure.

The reset control line 313, the selection control line 314, and the transfer selection control line 603 are shared by the plurality of pixel blocks 200. The reset control line 313, the selection control line 314, and the transfer selection control line 603 are wired so as to cross the first semiconductor substrate 110 in the row direction. The reset control line 313, the selection control line 314, and the transfer selection control line 603 may alternatively be wired so as to cross the first semiconductor substrate 110 in the column direction.

The reset control line 313 is connected to the gate terminals of the reset units 304 of the pixels 201 in the pixel block 200 and supply thereto the reset control signal ϕRST. The selection control line 314 is connected to the gate terminals of the selection units 352 of the pixels 201 in the pixel block 200 and supply thereto the selection control signal cpSEL. The transfer selection control line 603 is connected to the plurality of control blocks 400A and supplies the transfer selection control signal cpTXSEL to the pixel control unit 401.

The global driving unit 600 outputs the transfer selection control signal cpTXSEL from the second semiconductor substrate 120 to the control block 400A via the first semiconductor substrate 110, but may output the transfer selection control signal cpTXSEL to the control block 400A without passing through the first semiconductor substrate 110. In this case, the transfer selection control line 603 is provided to the second semiconductor substrate 120.

Junction units 610 are provided at a junction surface at which the first semiconductor substrate 110 and the second semiconductor substrate 120 are joined. The junction units 610 match the positions of the transfer control line 311, the discharge control line 312, and the transfer selection control line 603 between the first semiconductor substrate 110 and the second semiconductor substrate 120. The junction units 610 are each constituted of a pair of conductive junction pads, are joined by a pressurization treatment or the like between the first semiconductor substrate 110 and the second semiconductor substrate 120, and are electrically connected to each other.

The imaging element 100A changes the timing of the transfer unit 301 and/or the discharge unit 302 using local control lines such as the transfer control line 311 and the discharge control line 312, thereby controlling the exposure time for each pixel block 200. The imaging element 100A can control the exposure time with fewer control lines by combining local control lines such as the transfer control line 311 and the discharge control line 312 with global control lines such as the reset control line 313, the selection control line 314, and the transfer selection control line 603.

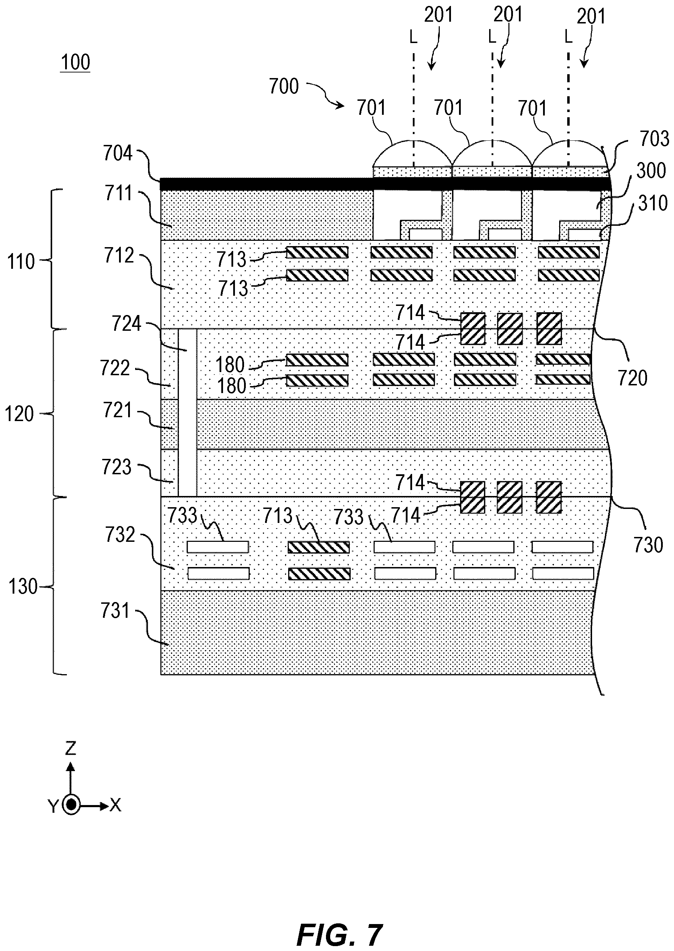

FIG. 7 is a descriptive view showing an example of an X-Z cross section of the imaging element 100A according to the present embodiment. In FIG. 7, a back-illuminated imaging element 100A is shown, but the imaging element 100A is not limited to being of a back-illuminated type. The imaging element 100A includes a microlens layer 700, a color filter layer 702, the first semiconductor substrate 110, the second semiconductor substrate 120, and the third semiconductor substrate 130. As shown, light from the subject enters via the direction indicated by the white arrows (the negative Z axis direction in the drawing). The side of the first semiconductor substrate 110 at which the light enters (the positive Z axis side in the drawing) is sometimes referred to as the front surface, and the side opposite thereto (the negative Z axis side in the drawing) is sometimes referred to as the rear surface.

The microlens layer 700 has a plurality of microlenses 701. The plurality of microlenses 701 are layered on the positive Z axis side of the color filter layer 702. Light enters the microlenses 701. The microlenses 701 condense the incident light onto the photoelectric conversion units 300. The microlens 701 may be provided for each photoelectric conversion unit 300. The optical axis L of the microlens 701 is the lamination direction (direction parallel to the Z axis) of the first semiconductor substrate 110, the second semiconductor substrate 120, and the third semiconductor substrate 130.

The color filter layer 702 has a plurality of color filters 703 and a passivation film 704. The color filter layer 702 is stacked on the positive Z axis side of a first semiconductor layer 711. The color filters 703 are optical filters that allow through light in specific wavelength regions. The color filters 703 are optical filters having specific spectral characteristics. The plurality of color filters 703 have a plurality of optical filters with differing spectral characteristics, and allow through light of different wavelength regions from each other. The plurality of color filters 703 are provided in a specific arrangement (e.g., a Bayer array).

An example of the first semiconductor substrate 110 is a back-illuminated CMOS image sensor. The first semiconductor substrate 110 has the first semiconductor layer 711 and a first wiring layer 712. The first semiconductor layer 711 is provided on the positive Z axis side of the first wiring layer 712. The first semiconductor layer 711 has a plurality of pixel blocks 200 that are arranged in two dimensions: the row direction and the column direction. The first semiconductor layer 711 has the plurality of pixels 201 that are arranged in two dimensions: the row direction and the column direction. The plurality of pixels 201 have, respectively, the plurality of photoelectric conversion units 300 that accumulate an electric charge on the basis of the incident light, and the plurality of read units 310.

The first wiring layer 712 is provided on the second semiconductor substrate 120 side of the first semiconductor layer 711 (the negative Z axis side in the drawing). The first wiring layer 712 has a plurality of wiring lines 713 made of a conductive film (metal film), a plurality of junction pads 714, and an insulating film (insulating layer).

The first wiring layer 712 has the plurality of wiring lines 713 that are electrically connected to a power source, a circuit, or the like. In the first semiconductor substrate 110, the wiring lines 713 are specifically a power source line to which a prescribed power source voltage is supplied, the signal line 202 that transfers pixel signals from the first semiconductor substrate 110 (pixels) to the second semiconductor substrate 120, the transfer control line 311 that transfers the control signal from the second semiconductor substrate 120 to the first semiconductor substrate 110 (pixels), the discharge control line 312, the reset control line 313, the selection control line 314, and the transfer selection control line 603, for example. The first wiring layer 712 may be multiple layers, and may be provided with a passive element and an active element.

The junction pad 714 is provided to the surface of the first wiring layer 712 (the surface on the negative Z axis side) and the wiring line 713. As will be described later, the junction pad 714 is used to aid the connection between layers. The junction pad 714 is made of an electrically conductive material such as copper, for example. Alternatively, the junction pad 714 may be made of gold, silver, or aluminum. An insulating layer (insulating film) is formed between the plurality of wiring lines 713 and between the plurality of junction pads 714.

The second semiconductor substrate 120 has a second semiconductor layer 721, a second wiring layer 722, and a wiring layer 723. The second wiring layer 722 is provided on the first semiconductor substrate 110 side of the second semiconductor layer 721 (the positive Z axis side in the drawing). The wiring layer 723 is provided on the third semiconductor substrate 130 side of the second semiconductor layer 721 (the negative Z axis side in the drawing), and is provided between the second semiconductor layer 721 and the third semiconductor substrate 130. The second semiconductor layer 721 has the control circuit unit 102 and the peripheral circuit units 121. The control circuit unit 102 has the plurality of control blocks 400A that are arranged in two dimensions: the row direction and the column direction.

Similar to the first semiconductor substrate 110, the second semiconductor substrate 120 has the plurality of wiring lines 713 provided in the second wiring layer 722, the plurality of junction pads 714 provided in the second wiring layer 722 and the wiring layer 723, and the insulating film (insulating layer) provided on the second wiring layer 722 and the wiring layer 723.

The second wiring layer 722 has the plurality of wiring lines 713 and junction pads 714 in order to be electrically connected to a power source, a circuit, or the like, to transmit signals from the pixel unit 101 to the control circuit unit 102, and to transmit signals from the control circuit unit 102 to the pixel unit 101. In the second semiconductor substrate 120, the wiring lines 713 are specifically a power source line to which a prescribed power source voltage is supplied, the signal line 202 that transfers pixel signals from the first semiconductor substrate 110 (pixels) to the second semiconductor substrate 120, the transfer control line 311 that transfers the control signal from the second semiconductor substrate 120 to the first semiconductor substrate 110 (pixels), the discharge control line 312, the reset control line 313, the selection control line 314, and the transfer selection control line 603, for example. The second wiring layer 722 may be multiple layers, and may be provided with a passive element and an active element. The wiring lines 713 and the junction pads 714 may be further provided in the wiring layer 723.

The second semiconductor substrate 120 further has a through-silicon via (TSV) 724 that connects the circuits provided on the front and rear surfaces thereof. It is preferable that the TSV 724 be provided in a peripheral region. The TSV 724 transmits image data and the like generated by the data processing unit 103 to the first semiconductor substrate 110. The TSV 724 may be provided to the first semiconductor substrate 110 and to the third semiconductor substrate 130.

The third semiconductor substrate 130 has a third semiconductor layer 731 provided with the data processing unit 103, and a third wiring layer 732. The third wiring layer 732 is provided between the first semiconductor layer 731 and the second semiconductor substrate 120.

Similar to the first semiconductor substrate 110, the third semiconductor substrate 130 has the wiring lines 713 and the plurality of junction pads 714 provided in the third wiring layer 732. The third wiring layer 732 has the plurality of wiring lines 713 and junction pads 714 in order to be electrically connected to a power source, a circuit, or the like, to transmit signals from the control circuit unit 102 to the data processing unit 103, and to transmit the signals from the data processing unit 103 to the control circuit unit 102 of the second semiconductor substrate 120.

The first semiconductor substrate 110, the second semiconductor substrate 120, and the third semiconductor substrate 130 are stacked so as to electrically connect the junction pads 714 provided in the respective layers and the junction between the wiring layers (insulating layers) of the respective layers.

When the first semiconductor substrate 110 and the second semiconductor substrate 120 are stacked, the negative Z axis-side surface of the first wiring layer 712 and the positive Z axis-side surface of the second wiring layer 722 constitute a boundary surface 720. Similarly, when the second semiconductor substrate 120 and the third semiconductor substrate 130 are stacked, the negative Z axis-side surface of the wiring layer 723 and the positive Z axis-side surface of the third wiring layer 732 constitute a boundary surface 730. The boundary surface 720 and the boundary surface 730 have disposed thereon the plurality of junction pads 714. Specifically, opposing junction pads 714 are position-matched to each other as the two layers are stacked, thereby forming an electric connection between the position-matched junction units.

The first semiconductor substrate 110, the second semiconductor substrate 120, and the third semiconductor substrate 130 may be stacked as wafers prior to be formed into chips, with the stacked wafers being diced, or the first semiconductor substrate 110, the second semiconductor substrate 120, and the third semiconductor substrate 130, as wafers, may be diced and then stacked.

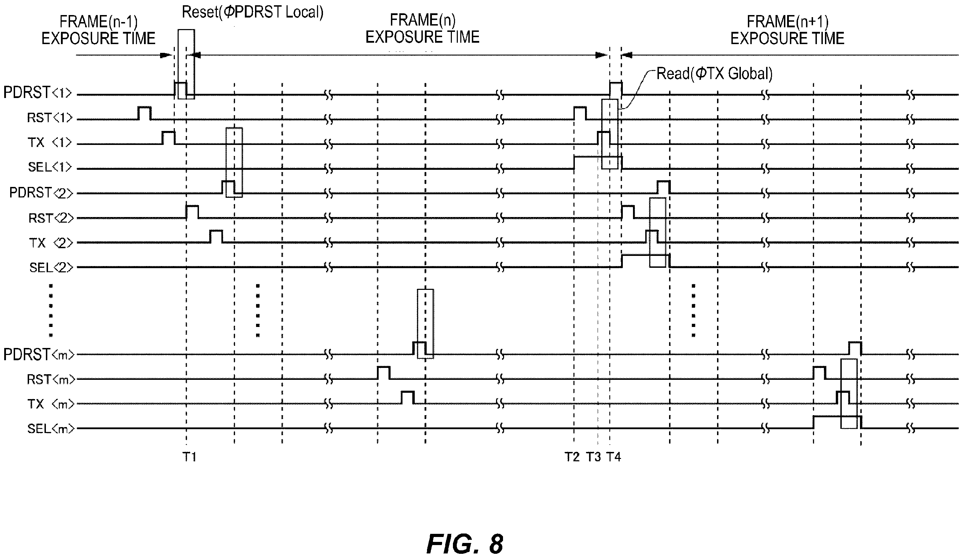

FIG. 8 is a timing chart showing an imaging operation example 1 of the imaging element 100A. FIG. 8 is an imaging operation example by which the driving of the imaging element 100A is controlled by the transfer control signal ϕTX, the discharge control signal ϕPDRST, the reset control signal ϕRST, and the selection control signal cpSEL. In FIG. 8, the discharge control signal cpPDRST is locally controlled, and the transfer control signal ϕTX, the reset control signal ϕRST, and the selection control signal cpSEL are globally controlled. The suffixes <1>, <2>...<m> of each signal on the left-hand side indicate the row numbers of the pixels 201 in the pixel block.

The discharge control signal cpPDRST controls the timing at which exposure is started. The exposure start timing corresponds to the fall timing of the discharge control signal cpPDRST (e.g., time T1). In other words, prior to the start time T1 for exposure, the discharge control signal cpPDRST causes the discharge unit 302 to turn ON, resulting in the electric charge accumulated in the photoelectric conversion unit 300 to be discharged, and the fall of the discharge control signal ϕPDRST results in the start of exposure. The discharge control signal cpPDRST is locally controlled, and thus, it is possible to adjust the exposure time for each pixel block 200.

The transfer control signal ϕTX controls the timing at which exposure is ended. At the time T3, the transfer control signal ϕTX turns ON the transfer unit 301, thereby transferring the accumulated electric charge in the photoelectric conversion unit 300 to the FD 303. The exposure end timing corresponds to the fall timing of the transfer control signal ϕTX (e.g., time T4). The transfer control signal ϕTX is a globally controlled signal, and thus, the timing at which exposure is ended is the same for all pixel blocks 200.

The reset control signal ϕRST controls the timing of discharge of the electric charge accumulated in the FD 303. At the time T2, the reset control signal ϕRST turns ON the reset unit 304, thereby discharging the electric charge of the FD 303. By discharging the electric charge in the FD 303 prior to the exposure end timing, it is possible to mitigate the effect of electric charge remaining in the FD 303 when the electric charge is transmitted from the photoelectric conversion unit 300.

The selection control signal cpSEL is a signal for selecting a given pixel 201. The selection control signal cpSEL controls the selection unit 352 so as to be ON or OFF. At the time T2, the selection control signal cpSEL is set to high. At the time T3, pixels 201 for which the selection control signal cpSEL is set to high output a pixel signal to the signal line 202 as the transfer control signal ϕTX turns ON. Meanwhile, no pixel signal is outputted from pixels 201 for which the selection control signal cpSEL is not set to high.

The imaging element 100A locally controls the discharge control signal cpPDRST to change the exposure start timing for each pixel block 200, thereby enabling control of the exposure time for each pixel block 200. Also, the imaging element 100A may locally control the transfer control signal ϕTX, thereby enabling control of the exposure end timing for each pixel block 200. Additionally, the imaging element 100A may locally control both the transfer control signal ϕTX and the discharge control signal ϕPDRST, thereby enabling control of both the start timing and end timing of exposure for each pixel block 200.

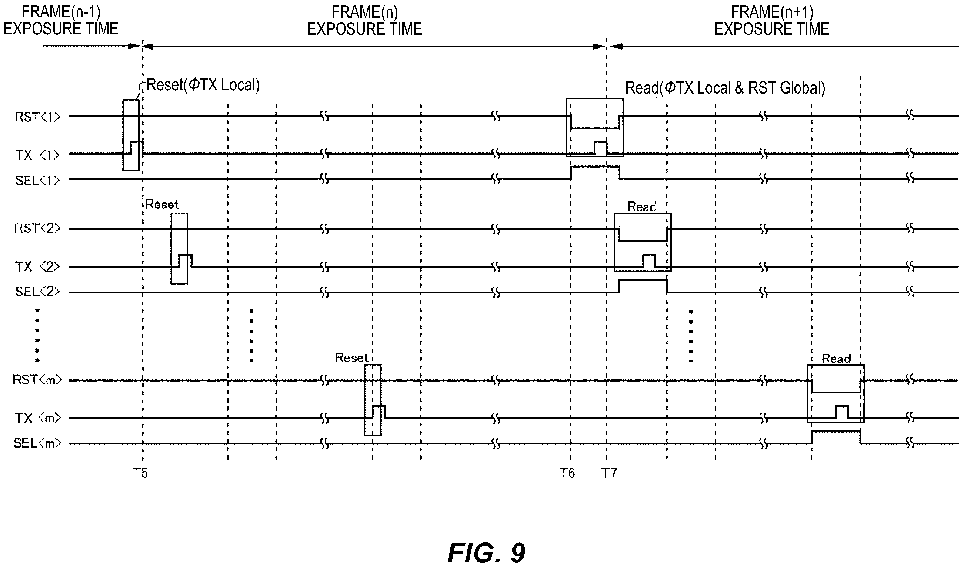

FIG. 9 is a timing chart showing an imaging operation example 2 of the imaging element 100A. FIG. 9 is an imaging operation example by which the driving of the imaging element 100A is controlled by the transfer control signal ϕTX, the reset control signal ϕRST, and the selection control signal cpSEL. This example differs from that of FIG. 8 in that the imaging element 100A controls the start timing of exposure using the transfer control signal ϕTX. Differences from the FIG. 8 will be described in particular.

The transfer control signal ϕTX controls the timing at which exposure is started and ended. During a frame (n), exposure is started at the time T5 and exposure is ended at the time T7.

At the exposure start time T5, the transfer control signal ϕTX falls, thereby starting exposure. In other words, prior to the start time T5 for exposure, the transfer control signal ϕTX causes the transfer unit 301 to turn ON in a state where the reset control signal ϕRST is turned ON, resulting in the electric charge accumulated in the photoelectric conversion unit 300 to be discharged, and the fall of the transfer control signal ϕTX results in the start of exposure. The transfer control signal ϕTX is a locally controlled signal, and thus, it is possible to change the timing at which exposure is started for each pixel block 200. However, the same timing for starting exposure may be used for all pixel blocks 200.

Also, at the exposure end time T7, the transfer control signal ϕTX falls, thereby ending exposure. In other words, prior to the end time T5 for exposure, the transfer control signal ϕTX causes the transfer unit 301 to turn ON in a state where the reset control signal ϕRST is turned OFF, resulting in the electric charge accumulated in the photoelectric conversion unit 300 to be transferred to the FD 303, and the fall of the transfer control signal ϕTX results in the end of exposure. The transfer control signal ϕTX is a locally controlled signal, and thus, it is possible to change the timing at which exposure is ended for each pixel block 200. However, the same timing for ending exposure may be used for all pixel blocks 200.

The selection control signal ϕSEL is a signal for selecting a given pixel 201. At the time T6, pixels 201 for which the selection control signal ϕSEL is set to high output a pixel signal to the signal line 202.

The reset control signal ϕRST controls the timing of discharge of the electric charge accumulated in the FD 303. The reset control signal ϕRST may be a globally controlled signal. The reset control signal ϕRST is set to ON at all times except for the read timing, and thus, no electric charge accumulates in the FD 303. By turning OFF the reset control signal ϕRST at the read timing and then turning ON the transfer control signal ϕTX, electric charge is transferred from the photoelectric conversion unit 300 to the FD 303. The reset control signal ϕRST has the same timing for switching during reading as the selection control signal ϕSEL, and thus, the same pulse timing as the selection control signal ϕSEL can be used.

The imaging element 100A locally controls the transfer control signal ϕTX to change the exposure start or end timing for each pixel block 200, thereby enabling control of the exposure time for each pixel block 200. Also, the imaging element 100A uses the same pulse timing for the reset control signal ϕRST and the selection control signal ϕSEL, and thus, it is possible to further simplify the control circuit.

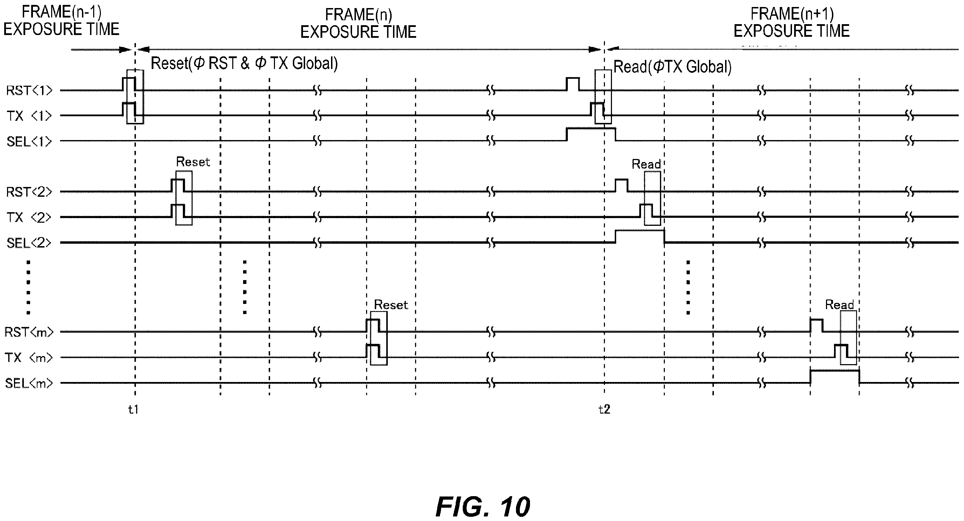

FIG. 10 is a timing chart showing an imaging operation of an imaging element according to a comparison example. FIG. 10 is an imaging operation example by which the driving of the imaging element is controlled by the transfer control signal ϕTX, the reset control signal ϕRST, and the selection control signal cpSEL, and the exposure time is not individually controlled for each pixel block 200.

In the comparison example, the transfer control signal ϕTX and the reset control signal ϕRST is used to control the start of exposure. The exposure start timing is the fall timing (time T1) of the transfer control signal ϕTX and the reset control signal ϕRST. The exposure end timing is the fall timing of the transfer control signal ϕTX (time t2). In the comparison example, the start timing and end timing of exposure are globally controlled, and the exposure time is not individually controlled for each pixel block 200.

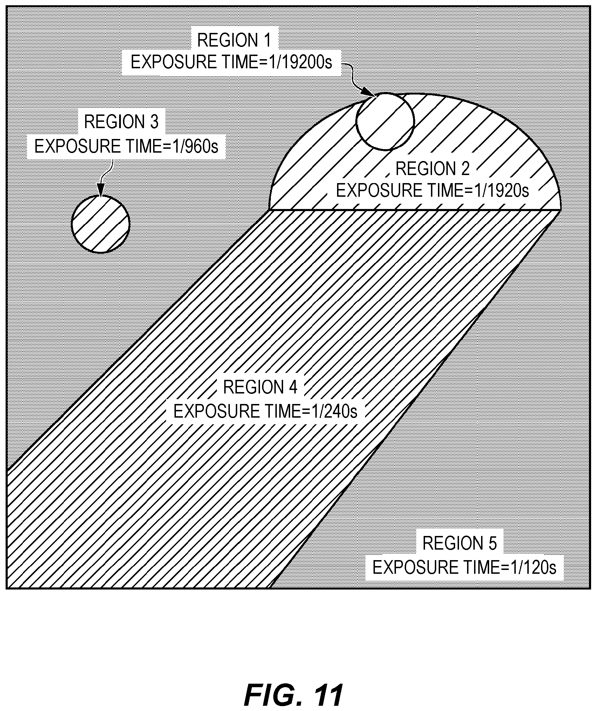

FIG. 11 is a descriptive view showing an example of a subject captured by the imaging element 100A. In FIG. 11, the imaging element 100A controls the exposure time for each pixel block 200 in a state where the sun in the west shines into a tunnel.

Regions 1 to 5 are five regions divided according to brightness. The regions 1 to 5 are assigned a number in order of brightness. The region 1 is the brightest region where the sun in the west is directly visible. The region 2 is a region corresponding to the exit of the tunnel, and is darker than the region 1. The region 3 is a region in the tunnel where the sun in the west is reflected, and is darker than the region 2. The region 4 is a region in the tunnel illuminated by the sun in the west through the exit, and is darker than the region 3. The region 5 is a region in the tunnel not illuminated by the sun in the west through the exit, and is the darkest region.

The imaging element 100A controls the exposure time for each pixel block 200 according to the brightnesses of the respective regions. The imaging element 100A controls the exposure times so as to be shorter for pixel blocks 200 in brighter regions. The exposure time for the region 1 is set to be the shortest, and the exposure time for the region 5 is set to be the longest. For example, the exposure times for the regions 1 to 5 are set to 1/19200s, 1/1920s, 1/960s, 1/240s, and 1/120s, respectively.

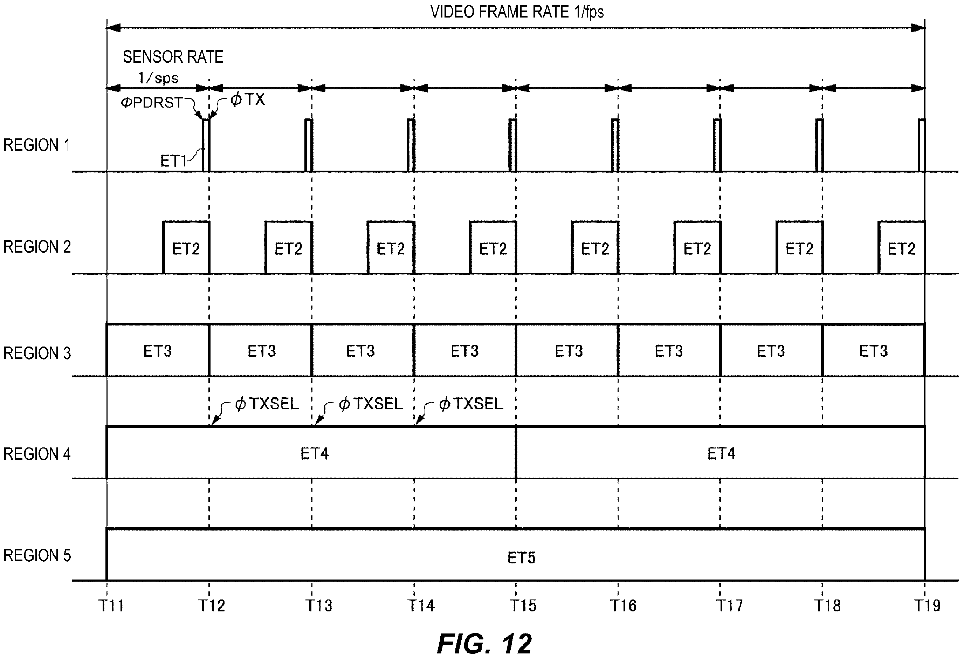

FIG. 12 is a timing chart showing the exposure times for the regions 1 to 5 shown in FIG. 11. In FIG. 12, the imaging element 100A controls the exposure time for each pixel block 200 in regions 1 to 5 shown in FIG. 11. The period from the time T11 to the time T19 corresponds to a video frame rate.

In the region 1, the control block 400A performs control for driving such that the exposure time in the pixel blocks 200 is a predetermined exposure time ET1. The control block 400A controls the start of exposure using the discharge control signal cpPDRST and controls the end of exposure using the transfer control signal ϕTX. In the region 1, exposure ends at each of the times T12 to T19.

In the region 2, the control block 400A performs control for driving such that the exposure time in the pixel blocks 200 is an exposure time ET2, which is longer than the exposure time ET1. The control block 400A sets the exposure start time of the region 2 to be earlier than for the region 1 while matching the exposure end time of the region 2 with that of the region 1. Thus, in the region 2, exposure ends at each of the times T12 to T19. The exposure time ET2 of the region 2 is shorter than the sensor rate period.

In the region 3, the control block 400A performs control for driving such that the exposure time in the pixel blocks 200 is an exposure time ET3, which is longer than the exposure time ET2. The control block 400A sets the exposure start time of the region 3 to be earlier than for the region 2 while matching the exposure end time of the region 3 with that of the region 2. Thus, in the region 3, exposure ends at each of the times T12 to T19. The exposure time ET3 of the region 3 is set to be the same as the sensor rate period.

In the region 4, the control block 400A performs control for driving such that the exposure time in the pixel blocks 200 is an exposure time ET4, which is longer than the exposure time ET3. The control block 400A sets the exposure start time of the region 4 to be the same as that of region 3, while skipping the exposure end time using the transfer selection control signal cpTXSEL. The control block 400A skips the exposure end time three times using the transfer selection control signal cpTXSEL, causing the region 4 to have quadruple the exposure time of the region 3. In the region 4, the transfer selection control signal cpTXSEL is supplied at each of the times T12 to T14.

In the region 5, the control block 400A performs control for driving such that the exposure time in the pixel blocks 200 is an exposure time ET5, which is longer than the exposure time ET4. The control block 400A sets the exposure start time of the region 5 to be the same as that of region 4, while increasing the number of instances that the exposure end time is skipped using the transfer selection control signal cpTXSEL. The control block 400A skips the exposure end time seven times using the transfer selection control signal cpTXSEL, causing the region 5 to have double the exposure time of the region 4. The exposure time ET5 of the region 5 is set to be the same as the sensor rate period. In the region 5, the transfer selection control signal cpTXSEL is supplied at each of the times T12 to T18.

The imaging element 100A realizes short exposure by bringing the intervals of the transfer control signal ϕTX and the discharge control signal cpPDRST to be closer to each other. Also, the imaging element 100 skips control by the transfer control signal ϕTX using the transfer selection control signal cpTXSEL, resulting in a long exposure. This enables expansion of the dynamic range.

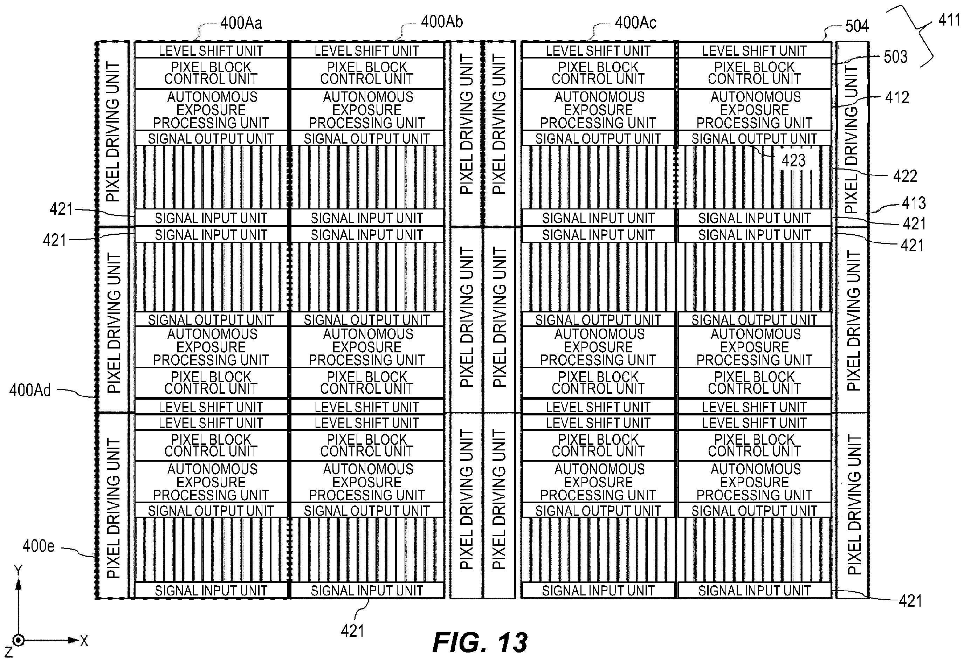

FIG. 13 is a plan view showing an example of a layout of the plurality of control blocks 400A. The plurality of control blocks 400A are disposed such that adjacent control blocks 400A are in an inverted arrangement to each other. FIG. 13 shows, as an example 12 control blocks 400A among the plurality of control blocks 400A provided in the control circuit unit 102.

An inverted arrangement refers to an arrangement whereby regions where components of the control block 400A are formed (e.g., the exposure control unit 412, the pixel driving unit 413, the signal input unit 421, the signal conversion unit 422, and the signal output unit 423) are mirrored from each other about the boundary line between the control blocks 400A. The circuits of the respective components of the control block 400A need not be in an inverted arrangement. Also, the order of reading each pixel in the control blocks 400A need not necessarily be inverted.

For example, in a case where a plurality of control blocks 400A disposed adjacent to each other in the row direction are in an inverted arrangement, the components of the control block 400A are inverted in the row direction, and thus, the respective pixel driving units 413 both control blocks 400A are arranged adjacent to each other at the boundary therebetween. As a result, the plurality of pixel driving units 413 arranged adjacent to each other in the row direction can be laid out as one pixel driving unit 413, thereby improving the layout efficiency of the control blocks 400A.

Similarly, in a case where a plurality of control blocks 400A disposed adjacent to each other in the column direction are in an inverted arrangement, the components of the control block 400A are inverted in the column direction, and thus, the same components of both control blocks 400A are arranged adjacent to each other at the boundary therebetween. As a result, the plurality of signal input units 421 arranged adjacent to each other in the column direction can be laid out as one signal input unit 421, thereby improving the layout efficiency of the control blocks 400A.

The control blocks 400A are each in an inverted arrangement with control blocks 400A disposed adjacent thereto. All control blocks 400A are in an inverted arrangement with each other in the row direction and the column direction, but may alternatively be in an inverted arrangement in either one of the row direction and the column direction. For example, the signal conversion unit 422 of the control block 400A is in an inverted arrangement with the signal conversion units 422 of the control blocks 400A adjacent thereto in the row direction. The signal conversion unit 422 of the control block 400A is also in an inverted arrangement with the signal conversion units 422 of the control blocks 400A that are adjacent thereto in the column direction.

The control block 400Aa and the control block 400Ab are arranged adjacent to each other in the row direction. The control block 400Aa is in an inverted arrangement with the control block 400Ab. The level shift unit 504 of the control block 400Aa is provided in the same well region as the level shift unit 504 of the control block 400Ab. Similarly, the pixel block control unit 503, the storage unit 502, and the signal output unit 423 are provided in the same well region for the control block 400Aa and the control block 400Ab.

The control block 400Ab and the control block 400Ac are arranged adjacent to each other in the row direction. The control block 400Ab is in an inverted arrangement with the control block 400Ac. The pixel driving unit 413 of the control block 400Ab is provided in the same well region as the pixel driving unit 413 of the control block 400Ac. The well region of the pixel driving unit 413 may be shared with the well region of the level shift unit 504.

The control block 400Aa and the control block 400Ad are arranged adjacent to each other in the column direction. The control block 400Aa is in an inverted arrangement with the control block 400Ad. The pixel driving unit 413 of the control block 400Aa is provided in the same well region as the pixel driving unit 413 of the control block 400Ad. Also, the signal conversion unit 422 of the control block 400Aa is provided in the same well region as the signal conversion unit 422 of the control block 400Ad.

The control block 400Ad and the control block 400Ae are arranged adjacent to each other in the column direction. The control block 400Ad is in an inverted arrangement with the control block 400Ae. The pixel driving unit 413 and the level shift unit 504 of the control block 400Ad is provided in the same well region as the pixel driving unit 413 and the level shift unit 504 of the control block 400Ae.

As a result of the control blocks 400A being in an inverted arrangement, the imaging element 100 can achieve increased layout efficiency even if the signals are processed in parallel between the control blocks 400A. As a result of a plurality of the control blocks 400A being in an inverted arrangement on the XY plane, the imaging element 100A can have shared well regions between adjacent control blocks 400A. As a result, the number of instances of switching of the well region is decreased and the area efficiency is improved.

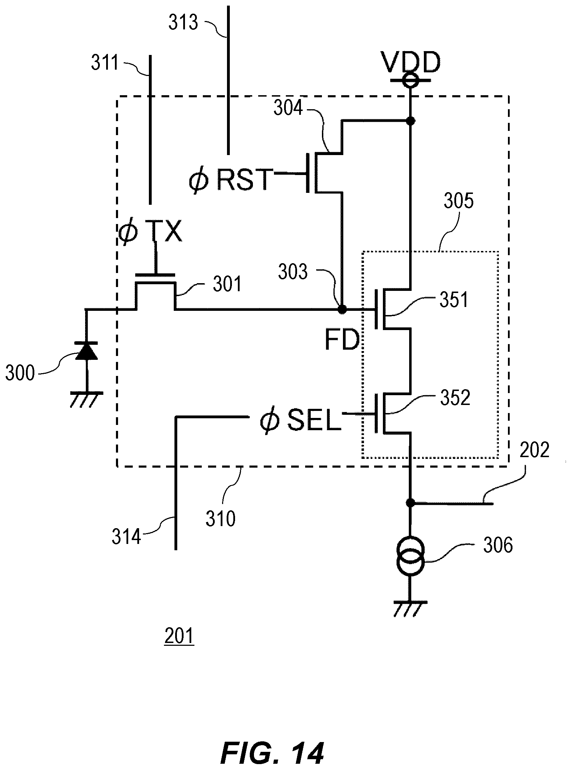

FIG. 14 is a circuit diagram showing another example of a circuit configuration of the pixel 201. In the pixel 201, components that are the same as those of FIG. 3 are assigned the same reference characters and explanations thereof are omitted. In the pixel 201, the discharge unit 302 provided in the previously described pixel 201 is omitted. If discharging the electric charge accumulated in the photoelectric conversion unit 300 to the power source line to which the power source voltage VDD is supplied, the transfer control signal ϕTX is inputted to the gate terminal of the transfer unit 301, and the reset control signal ϕRST is inputted to the gate terminal of the reset unit 304.

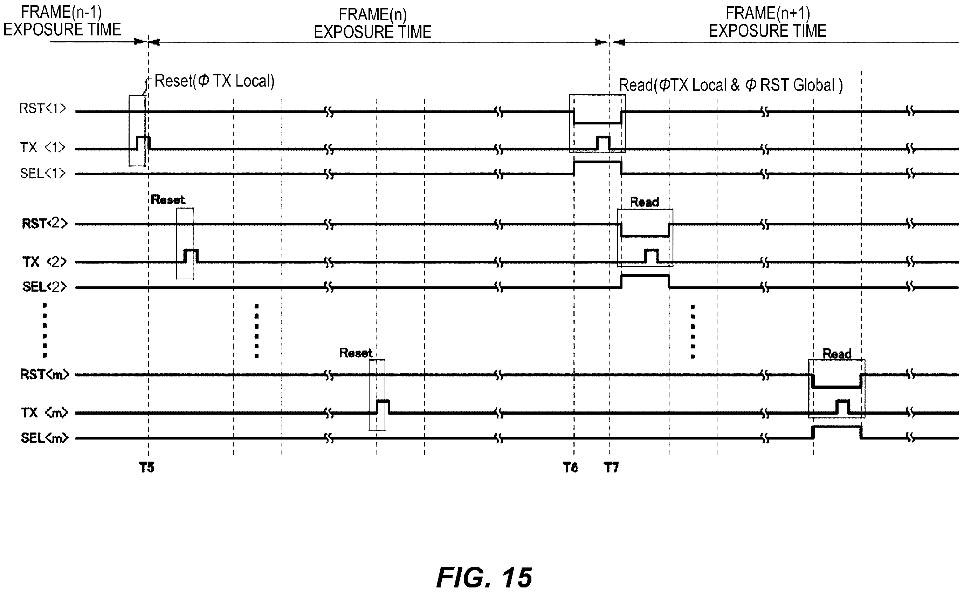

FIG. 15 is a timing chart showing an imaging operation example 3 of the imaging element 100A. FIG. 15 is an imaging operation example by which the pixel 201 shown in FIG. 14 is used and the driving of the imaging element 100A is controlled by the transfer control signal ϕTX, the reset control signal ϕRST, and the selection control signal cpSEL. This example differs from that of FIG. 12 in that the imaging element 100A controls the start timing of exposure using the transfer control signal ϕTX. Differences from the FIG. 12 will be described in particular.

The transfer control signal ϕTX controls the timing at which exposure is started and ended. During a frame (n), exposure is started at the time T5 and exposure is ended at the time T7.

At the exposure start time T5, the transfer control signal ϕTX falls, thereby starting exposure. In other words, prior to the start time T5 for exposure, the transfer control signal ϕTX causes the transfer unit 301 to turn ON in a state where the reset control signal ϕRST is turned ON, resulting in the electric charge accumulated in the photoelectric conversion unit 300 to be discharged, and the fall of the transfer control signal ϕTX results in the start of exposure. The transfer control signal ϕTX is a locally controlled signal, and thus, it is also possible to change the timing at which exposure is started for each pixel block 200.

Also, at the exposure end time T7, the transfer control signal ϕTX falls, thereby ending exposure. In other words, prior to the end time T5 for exposure, the transfer control signal ϕTX causes the transfer unit 301 to turn ON in a state where the reset control signal ϕRST is turned OFF, resulting in the electric charge accumulated in the photoelectric conversion unit 300 to be transferred to the FD 303, and the fall of the transfer control signal ϕTX results in the end of exposure. The transfer control signal ϕTX is a locally controlled signal, and thus, it is also possible to change the timing at which exposure is ended for each pixel block 200.

The selection control signal cpSEL is a signal for selecting a given pixel 201. At the time T6, pixels 201 for which the selection control signal cpSEL is set to high output a pixel signal to the signal line 202.

The reset control signal ϕRST controls the timing of discharge of the electric charge accumulated in the FD 303. The reset control signal ϕRST may be a globally controlled signal. The reset control signal ϕRST is set to ON at all times except for the read timing, and thus, no electric charge accumulates in the FD 303. By turning OFF the reset control signal ϕRST at the read timing and then turning ON the transfer control signal ϕTX, electric charge is transferred from the photoelectric conversion unit 300 to the FD 303. The reset control signal ϕRST has the same timing for switching during reading as the selection control signal cpSEL, and thus, the same pulse timing as the selection control signal ϕSEL can be used.

Thus, according to the configuration of the imaging element 100A shown in FIGs. 1 to 15, exposure can be performed for each pixel block 200 constituted of the plurality of pixels 201, with pixel signals from the pixel blocks 200 being read by each control block 400A corresponding to each pixel block 200 and the analog pixel signals being converted to digital signals. Also, the imaging element 100A uses the control blocks 400A provided for each of the pixel blocks 200 to read the pixel signals from the pixel blocks 200 in parallel. Thus, the imaging element 100A can set the exposure time for each pixel block 200 according to the intensity of incident light, and thus, can expand the dynamic range.

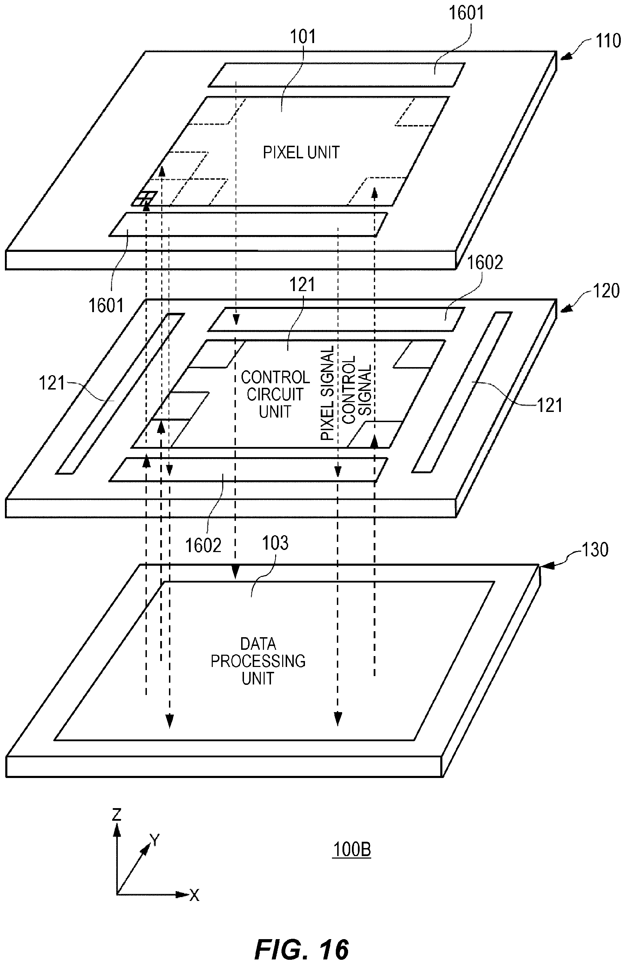

Next, using FIGs. 16 to 22, the configuration of an imaging element 100B will be described in which exposure is performed for each pixel block 200 individually, but the pixel signals are sequentially read for each pixel row, and A/D conversion is performed for each pixel column.

FIG. 16 is an exploded perspective view showing another example of an imaging element. The imaging element 100B includes a first semiconductor substrate 110, a second semiconductor substrate 120, and a third semiconductor substrate 130. As shown in FIG. 16, the first semiconductor substrate 110 is stacked on the second semiconductor substrate 120, and the second semiconductor substrate 120 is stacked on the third semiconductor substrate 130.

The first semiconductor substrate 110 has a pixel unit 101 and connection regions 1601. The pixel unit 101 outputs pixel signals based on incident light. The connection regions 1601 are disposed to the sides of the pixel unit 101. In the example of FIG. 16, a pair of connection regions 1601 are disposed along two opposing sides of the first semiconductor substrate 110 to the front and rear of the pixel unit 101.

The second semiconductor substrate 120 has a control circuit unit 102, peripheral circuit units 121, and signal processing units 1602.

The control circuit unit 102 outputs, to the pixel unit 101, a control signal for controlling the driving of the pixel unit 101. The control circuit unit 102 is disposed at a position in the second semiconductor substrate 120 opposing the pixel unit 101.

The peripheral circuit units 121 control the driving of the control circuit unit 102. The peripheral circuit units 121 are on the second semiconductor substrate 120 at positions in the periphery of the control circuit unit 102. Also, the peripheral circuit units 121 may be electrically connected to the first semiconductor substrate 110 and control the driving of the pixel unit 101. The peripheral circuit units 121 are disposed along two opposing sides of the second semiconductor substrate 120, but the method for arranging the peripheral circuit units 121 is not limited to this example.

The signal processing units 1602 receive input of an analog pixel signal outputted from the first semiconductor substrate 110. The signal processing units 1602 perform signal processing of the pixel signals. The signal processing units 1602 perform processing to convert the analog pixel signals to digital signals, for example. The signal processing units 1602 may perform other signal processes. Examples of other signal processes include noise removal processing such as analog or digital correlated double sampling (CDS). The signal processing units 1602 are provided in the periphery, or in other words, the outer sides of the control circuit unit 102. In the example of FIG. 16, a pair of signal processing units 1602 are disposed along two opposing sides of the second semiconductor substrate 120 to the front and rear of the control circuit unit 102. The signal processing units 1602 may be circuits included in the peripheral circuit units 121.

The third semiconductor substrate 130 has a data processing unit 103. The data processing unit 103 uses digital data outputted from the second semiconductor substrate 120 to perform addition, thinning, and other types of image processing.

FIG. 17 is a descriptive view showing another example of a specific configuration of the control circuit unit 102. In FIG. 17, the control block 400A has a pixel control unit 401 (autonomous exposure processing unit 411, exposure control unit 412, and pixel driving unit 413) but does not have the signal processing unit 402.

Instead of providing one control block 400B for each pixel block 200, one control block 400B may be provided for N (N being a natural number of 2 or greater) pixel blocks 200. The N pixel blocks 200 corresponding to each pixel block are sometimes collectively referred to as a pixel block group. For example, one control block 400B may be provided to correspond to two pixel blocks 200 arranged along the column direction as one pixel block group. In this case, the control block B may control the exposure time of the pixel blocks 200 individually.

In addition, the control block 400B is electrically connected to at least one pixel block 200, and is the minimum unit for a circuit that controls the exposure of the pixels 201 of the at least one pixel block 200.

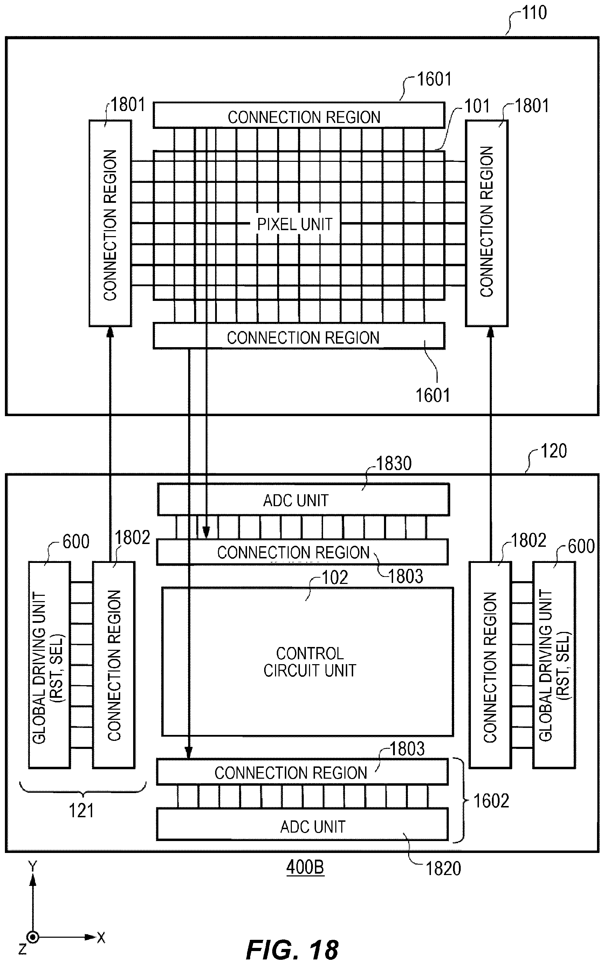

FIG. 18 is a descriptive view showing a connective relationship between the first semiconductor substrate 110 and the second semiconductor substrate 120 in the imaging element 100B. The first semiconductor substrate 110 includes connection regions 1801 that are provided in the periphery of the pixel unit 101 and that are electrically connected to the pixel unit 101, and connection regions 1601. The second semiconductor substrate 120 includes connection regions 1802 that are provided in the periphery of the control circuit unit 102 and that are electrically connected to the control circuit unit 102, and connection regions 1803.

The pair of connection regions 1801 are respectively connected to the pair of connection regions 1802 at opposing positions thereto. The connection regions 1801 and the connection regions 1802, which are connected to each other, input control signals from the global driving unit 600 to the pixel unit 101 using global control lines.

The pair of connection regions 1601 are respectively connected to the pair of connection regions 1803 at opposing positions thereto. The connection regions 1601 and the connection regions 1803, which are connected to each other, input pixel signals from the pixel unit 101 to an ADC unit 1820 and an ADC unit 1830 corresponding thereto using shared signal lines.

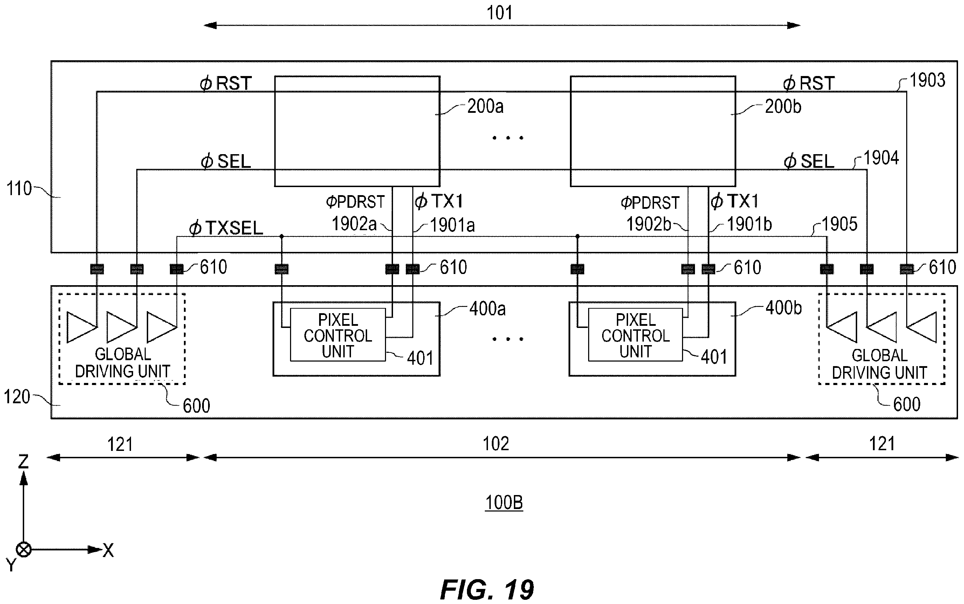

FIG. 19 is a descriptive view showing a transmission example for signals between the first semiconductor substrate 110 and the second semiconductor substrate 120 in the imaging element 100B. The global driving unit 600 outputs a reset control signal ϕRST, a selection control signal cpSEL, and a transfer selection control signal cpTXSEL. The global driving unit 600 is connected to a reset control line 1903 and a selection control line 1904 that output signals to the respective pixel blocks 200. The global driving unit 600 supplies the reset control signal ϕRST to the plurality of pixel blocks 200 via the reset control line 1903, and supplies the selection control signal ϕSEL via the selection control line 1904. The global driving unit 600 supplies the transfer selection control signal cpTXSEL to the plurality of control blocks 400B via a transfer selection control line 1905.

The transfer selection control signal cpTXSEL is supplied from the global driving unit 600 to the control block 400B in order to control the exposure time for each pixel block 200. The control block 400B to which the transfer selection control signal cpTXSEL was supplied outputs the transfer selection control signal cpTXSEL to the corresponding pixel block 200. The pixel block 200 determines whether to input, to the pixels 201, the transfer selection control signal cpTXSEL as the transfer control signal ϕTX or the discharge control signal cpPDRST. As a result, the input of the transfer control signal ϕTX or the discharge control signal cpPDRST to the pixels 201 is skipped.

If the transfer control signal ϕTX determines the end time for exposure, for example, then the control block 400B extends the exposure time by skipping the transfer control signal ϕTX. If the transfer control signal ϕTX determines the start time for exposure, then the control block 400B can shorten the exposure time by skipping the transfer control signal ϕTX. In this manner, the transfer selection control signal cpTXSEL can be used to adjust the exposure time of the pixel block 200. This similar applies to cases in which the discharge control signal cpPDRST determines the start time or the end time for exposure.

The reset control line 1903, the selection control line 1904, and the transfer selection control line 1905 are globally wired, or in other words, shared by the plurality of pixel blocks 200. The reset control line 1903, the selection control line 1904, and the transfer selection control line 1905 are wired so as to cross the pixel unit 101 in the row direction. The reset control line 1903, the selection control line 1904, and the transfer selection control line 1905 may alternatively be wired so as to cross the pixel unit 101 in the column direction.

The reset control line 1903 is connected to the gate terminals of the reset units 304 of the pixel block 200 and supply thereto the reset control signal ϕRST. The selection control line 1904 is connected to the gate terminals of the selection units 352 of the pixel block 200 and supply thereto the selection control signal cpSEL. Also, the transfer selection control line 1905 is connected to the plurality of control blocks 400B and supplies the transfer selection control signal cpTXSEL to the pixel control unit 401.

The global driving unit 600 outputs the transfer selection control signal cpTXSEL from the second semiconductor substrate 120 to the first semiconductor substrate 110, but may output the transfer selection control signal cpTXSEL to the control block 400B without supplying the same to the first semiconductor substrate 110. In this case, the transfer selection control line 1905 is provided to the second semiconductor substrate 120.

Meanwhile, a transfer control line 1901a and a discharge control line 1902a are connected to a pixel block 200a. The transfer control line 1901a is connected to the gate terminals of the transfer units 301 provided to the pixel block 200a. The transfer control line 1901a supplies the transfer control signal ϕTX outputted from a control block 400Ba to the pixel block 200a. The discharge control line 1902a is connected to the gate terminals of the discharge units 302 provided to the pixel block 200a. The discharge control line 1902a supplies the discharge control signal cpPDRST outputted from the control block 400Ba to the pixel block 200a.

A transfer control line 1901b and a discharge control line 1902b are connected to a pixel block 200b. The transfer control line 1901b is connected to the gate terminals of the transfer units 301 provided to the pixel block 200b. The transfer control line 1901b supplies the transfer control signal ϕTX outputted from a control block 400Bb to the pixel block 200b. The discharge control line 1902b is connected to the gate terminals of the discharge units 302 provided to the pixel block 200b. The discharge control line 1902b supplies the discharge control signal cpPDRST outputted from the control block 400Bb to the pixel block 200b.

A plurality of junction units 610 are provided at a junction surface at which the first semiconductor substrate 110 and the second semiconductor substrate 120 are joined. The junction units 610 of the first semiconductor substrate 110 are position-matched with the junction units 610 of the second semiconductor substrate 120. The opposing plurality of junction units 610 are joined by a pressurization treatment or the like between the first semiconductor substrate 110 and the second semiconductor substrate 120, and are electrically connected to each other. In this case, the junction units 610 of global control lines may be disposed below the corresponding pixel blocks 200 or may be present in the connection regions 1801 and the connection regions 1802. Meanwhile, the junction units 610 of local control lines are provided below the corresponding pixel blocks 200 (which is also above the control blocks 400B).

The imaging element 100B changes the timing of the transfer unit 301 and/or the discharge unit 302 using local control lines, thereby controlling the exposure time for each pixel block 200. The imaging element 100B can control the exposure time with fewer control lines by combining local control lines with global control lines.

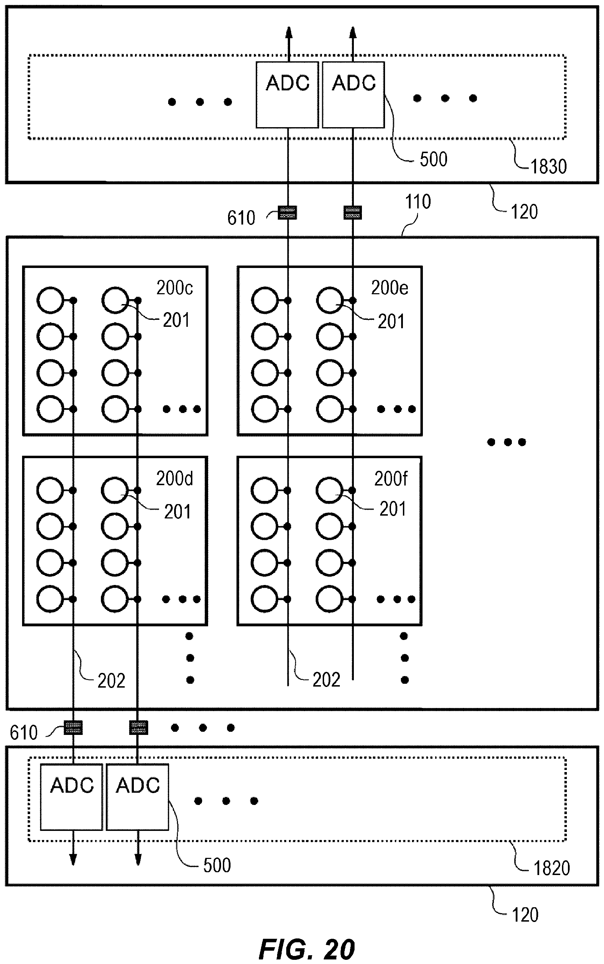

FIG. 20 is a descriptive view showing a connective relationship between ADC units and pixel blocks. As shown in FIG. 20, a shared signal line 202 extending in the column direction is disposed for each column in the pixel block 200c. This signal line 202 is also common to a plurality of pixel blocks 200c and 200d that are arranged in the column direction. Thus, in this example, m×M pixels 201 arranged in a column are connected to each signal line 202, and pixel signals are outputted from these pixels 201.

Each of the signal lines 202 is connected via the junction unit 610 to an ADC 2000 on the second semiconductor substrate 120. The plurality of ADCs 2000 corresponding to the plurality of signal lines 202 constitute the ADC unit 1820.

In the example of FIG. 20, the ADCs 2000 corresponding to pixel blocks 200c and 200d in odd-numbered columns are provided to the ADC unit 1820, and the ADCs 2000 corresponding to pixel blocks 200e and 200f in even-numbered columns are provided to the ADC unit 1830. However, the arrangement relationship between the pixel block 200c and the like and the corresponding ADC 1820 and the like is not limited thereto.

By this configuration, the respective ADCs 2000 convert the pixel signals sequentially outputted from the m×M pixels 201 in a connected column into digital signals and output the digital signals. In this case, the ADC units 1820 and 1830 overall convert, in a parallel fashion, the pixel signals outputted from the pixels 201 arranged in n×N columns in the row direction into digital signals. From this perspective, this digital conversion can be said to be one type of so-called column ADCs. Single slope ADCs are an example of ADCs here, but other digital conversion modes may be employed. The connecting position between the pixels 201 and the signal line 202 is not limited to the aspect shown in FIG. 20, and as another example, may be inside each of the pixel blocks 200c or the like.

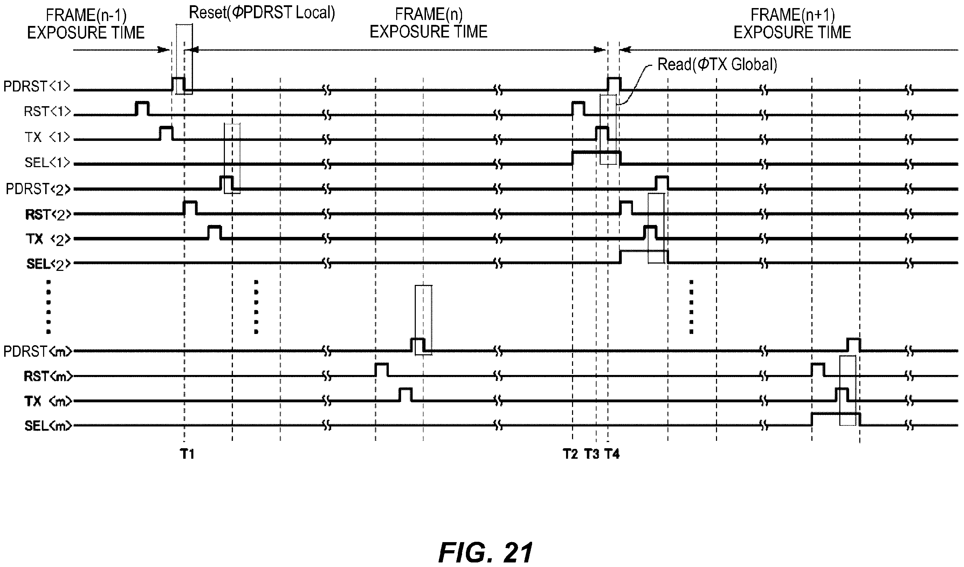

FIG. 21 is a timing chart showing an imaging operation in the pixel block 200 of the imaging element 100B. The driving of the pixel blocks 200 is controlled by the transfer control signal ϕTX, the discharge control signal ϕPDRST, the reset control signal ϕRST, and the selection control signal cpSEL.

The discharge control signal cpPDRST controls the timing at which exposure is started. The exposure start timing corresponds to the fall timing of the discharge control signal cpPDRST (e.g., time T1). In other words, prior to the start time T1 for exposure, the discharge control signal cpPDRST causes the discharge unit 302 to turn ON, resulting in the electric charge accumulated in the photoelectric conversion unit 300 to be discharged, and the fall of the discharge control signal ϕPDRST results in the start of exposure. The discharge control signal cpPDRST is locally controlled, and thus, it is possible to adjust the exposure time for each pixel block 200.

The transfer control signal ϕTX controls the timing at which exposure is ended. At the time T3, the transfer control signal ϕTX turns ON the transfer unit 301, thereby transferring the accumulated electric charge in the photoelectric conversion unit 300 to the FD 303. The exposure end timing corresponds to the fall timing of the transfer control signal ϕTX (e.g., time T4).

The reset control signal ϕRST controls the timing of discharge of the electric charge accumulated in the FD 303. At the time T2, the reset control signal ϕRST turns ON the reset unit 304, thereby discharging the electric charge of the FD 303. By discharging the electric charge in the FD 303 prior to the exposure end timing, it is possible to mitigate the effect of electric charge remaining in the FD 303 when the electric charge is transmitted from the photoelectric conversion unit 300.

The selection control signal cpSEL is a signal for selecting a given pixel 201. The selection control signal cpSEL controls the selection unit 352 so as to be ON or OFF. At the time T2, the selection control signal cpSEL is set to high. At the time T3, pixels 201 for which the selection control signal cpSEL is set to high output a pixel signal to the signal line 202 as the transfer control signal ϕTX turns ON. Meanwhile, no pixel signal is outputted from pixels 201 for which the selection control signal cpSEL is not set to high.

The imaging element 100B locally controls the discharge control signal cpPDRST to change the exposure start timing for each pixel block 200, thereby enabling control of the exposure time for each pixel block 200. Also, the imaging element 100B may locally control the transfer control signal ϕTX, thereby enabling control of the exposure end timing for each pixel block 200. Also, the imaging element 100B may locally control both the transfer control signal ϕTX and the discharge control signal ϕPDRST, thereby enabling control of both the start timing and end timing of exposure for each pixel block 200.

The pixel signals of the pixels 201 correspond to the quantity of electric charge accumulated in the photoelectric conversion units 300. Thus, controlling the exposure timings of the pixels 201 entails controlling the timings at which the photoelectric conversion units 300 accumulate the electric charge. More specifically, controlling the exposure timings of the pixels 201 entails controlling the timings and lengths of the electric charge accumulation time from discharge to transfer of the electric charge.

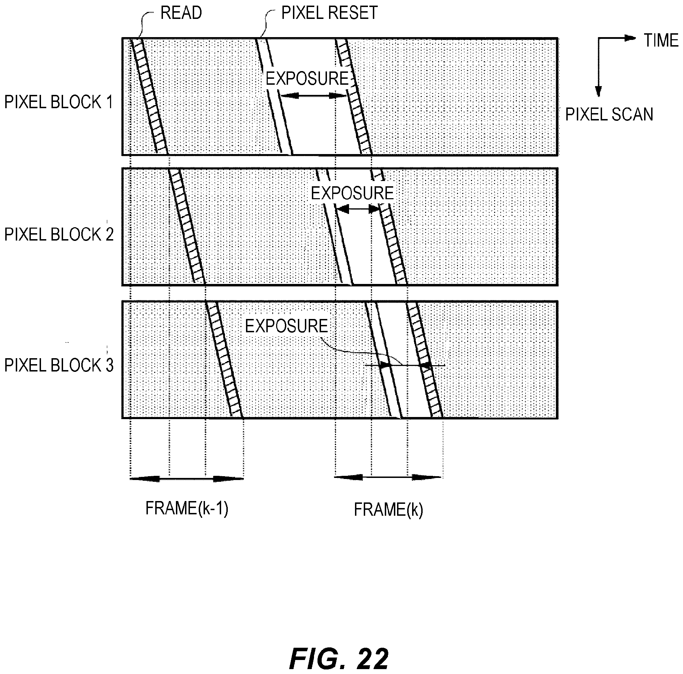

FIG. 22 is a descriptive diagram showing an example of an exposure timing of each pixel block 200. The exposure time is controlled for each of the three pixel blocks 200 arranged in a column. Here, the imaging element 100B offsets the pixel reset times of the respective pixel blocks 200, thereby changing the exposure amount.

Meanwhile, the read timings for the pixel signals are in sequence from the topmost pixel block 200. In other words, the pixel signals are read from pixels 201 of a "pixel block 1," pixel signals are read from pixels 201 of a "pixel block 2," and then pixel signals are read from pixels 201 of a "pixel block 3."

Additionally, even in the pixel block 200, as described with reference to FIG. 21, the pixel signals are sequentially read from pixels 201 starting in the top row. Thus, in the pixel unit 101 overall, pixel signals are read in sequence from the top row of the m×M pixels 201 in the same column connected to the same signal line 202. In other words, the global driving unit 600 covers a plurality of pixel blocks 200 arranged in a row from the 1st row to the m×Mth row in setting the selection control signal cpSEL to high, one row at a time.

In this case, as described in FIG. 20, for the plurality of pixel blocks 200 arranged in a row, the same selection control line 1904 is connected to the n×N pixels arranged in the same row. Thus, pixel signals are read in parallel from the n×N pixels 201 connected in a row for which the selection control signal cpSEL is set to high. As a result, it is possible to output an entire frame of pixel signals.

These pixel signals are, as described with reference to FIG. 20, converted to digital signals by the ADC units 1820 and 252. The pixel signals converted to digital signals are outputted to the next stage of image processing, thereby forming one frame of image.

As described above, the reading of the pixel signals is conducted sequentially from the top row of the same column among the plurality of pixel blocks 200, and from that perspective, the read method of the present embodiment can be said to be the so-called rolling shutter mode in the pixel unit 101 overall. However, even in such a case, different exposure times can be set for each pixel block 200.

In this manner, the imaging element 100B shown in FIGs. 16 to 22 performs exposure for each pixel block 200 individually, but the pixel signals are sequentially read for each pixel row, and A/D conversion is performed for each pixel column. Specifically, the imaging element 100B reads the pixel signals from the pixels 201 of the top pixel block 200 among the plurality of pixel blocks 200 arranged in a column, and then reads the pixel signals from pixels 201 in the pixel block 200 therebelow. Thus, distortions in the image resulting from the read order when capturing a moving subject are smoothed, and it is possible to display images with a more natural appearance to the viewer. More specifically, if a moving subject is read in parallel from the plurality of pixel blocks 200 arranged in a column, a plurality of stair-like shapes corresponding to the individual pixel blocks 200 forming a jagged edge appear in the vertical direction (i.e., the column direction of the pixels) of the image, resulting in an unnatural appearance to the viewer. By contrast, in the imaging element 100B shown in FIGs. 16 to 22, the plurality of stair-like shapes do not appear in the image.

The imaging element 100B shown in FIGs. 16 to 22 is not provided with ADC units, inside the control block 400B, that convert the analog signals to digital signals, and has signal processing units 1602 disposed outside of the control circuit unit 102. Thus, it is possible to reduce the area of the control block 400B, and reduce the size of the pixel blocks 200 disposed at positions corresponding to the control block 400B, or in other words, to perform exposure control by the control block 400B of fewer pixels. As a result, it is possible to perform precise exposure time control within the image, allowing for the boundaries between the pixel blocks 200 not to be conspicuous within the image. Additionally, it is possible to prevent the effect of noise on the pixels 201 resulting from heating, since digital conversion is not performed directly below the pixels 201.

Thus, the signal processing units 1602 need not be provided at a plurality of distant regions, and may instead be provided in one region for the overall pixel unit 101.

As described above, similar to the imaging element 100A, the reading of the pixel signals is conducted sequentially from the top row of the same column among the plurality of pixel blocks 200, and from that perspective, the read method of the imaging element 100B can also be said to be the so-called rolling shutter mode in the pixel unit 101 overall. However, like the imaging element 100A, even in such a case, different exposure times can be set for each pixel block 200. Thus, like the imaging element 100A, in the imaging element 100B as well, distortions in the image resulting from the read order when capturing a moving subject are smoothed, and it is possible to display images with a more natural appearance to the viewer.

### [Autonomous Exposure Processing Unit 411]

Next, details regarding the above-mentioned autonomous exposure processing unit 411 will be described. In the description below, if not distinguishing between the imaging elements 100A and 100B, the reference character 100 is used for the imaging element, and if not distinguishing between the control blocks 400A and 400B, the reference character 400 is used for the control block.

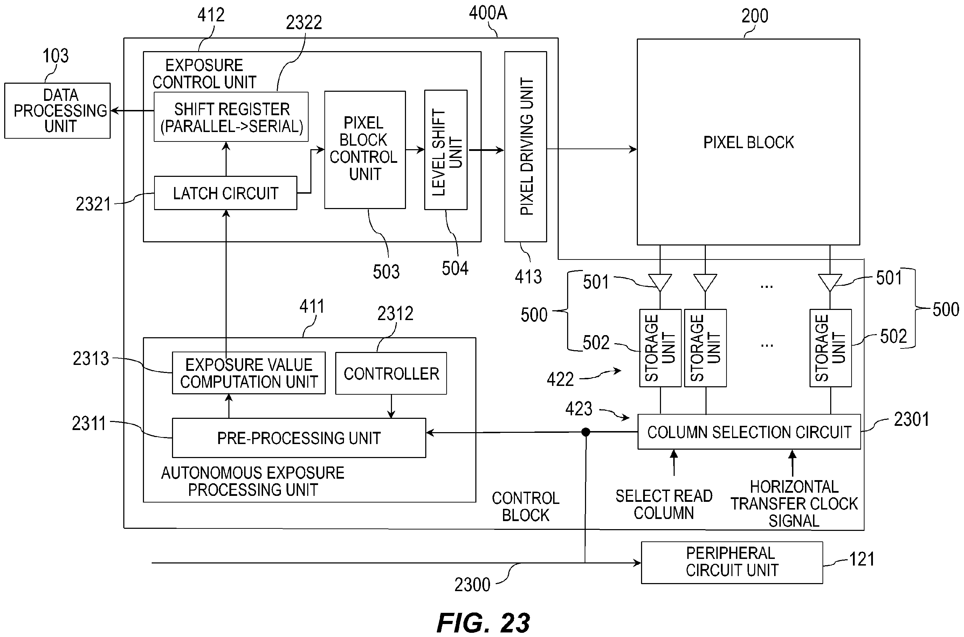

As indicated in FIGs. 4 and 17, the autonomous exposure processing unit 411 is mounted in the control block 400. Alternatively, the autonomous exposure processing unit 411 can be mounted in the peripheral circuit units 121 instead of the control block 400, or can be mounted in both the control block 400 and the peripheral circuit units 121. Below, these three patterns will be described with reference to FIGs. 23 to 25.

FIG. 23 is a block diagram showing a configuration example of an autonomous exposure control mode 1. The autonomous exposure control mode 1 is a configuration example in which the autonomous exposure processing unit 411 is mounted in the control block 400. As a result of the autonomous exposure processing unit 411 being added inside the control block 400, the circuit size of the control block 400 increases, but the size of each pixel 201 in the pixel block 200 correspondingly increases, and thus, it is possible to increase the light reception area.

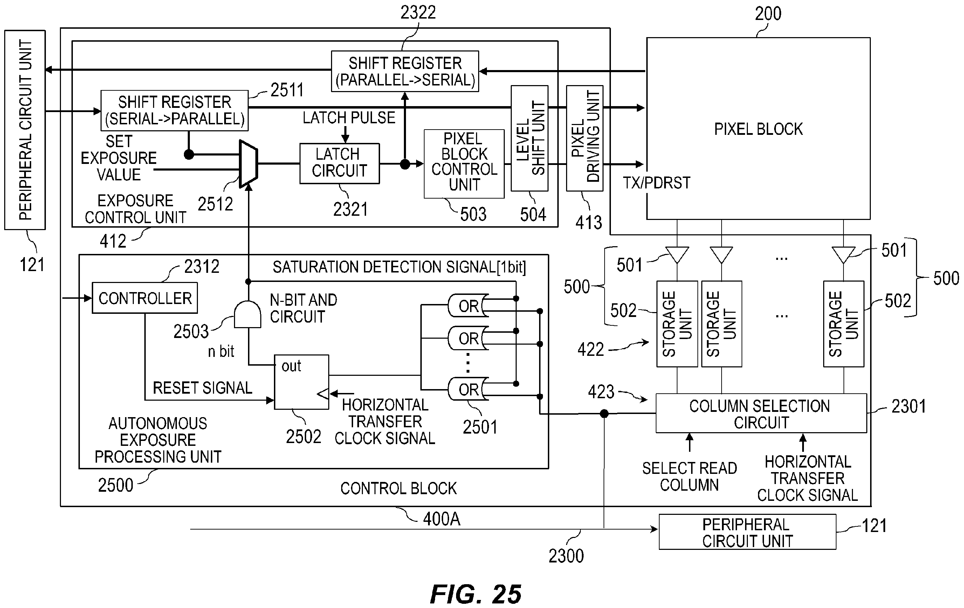

In FIG. 23, the control block 400A is the described example (similarly applies to FIG. 25). The control block 400A has the signal conversion unit 422, the signal output unit 423, the autonomous exposure processing unit 411, the exposure control unit 412, and the pixel driving unit 413. For ease of description, the signal input unit 421 is omitted. In the case of the control block 400B, the signal input unit 421, the signal conversion unit 422, and the signal output unit 423 are not included in the control block 400B, and are disposed on the second semiconductor substrate 120 as the signal processing unit 1602 (similarly applies to FIG. 25).

The signal conversion unit 422 has n ADCs 500. Each of the n ADCs 500 converts the analog pixel signals from the m pixels 201 connected to each other in the column direction to digital signals. The ADC 500 is constituted of a comparator 501 and a storage unit 502.

A column selection circuit 2301 is included in the signal output unit 423. The column selection circuit 2301 sequentially selects the columns of the pixel block 200 every time a read column selection signal is inputted from the outside. The column selection circuit 2301 outputs the digital pixel signals from the m pixels 201 in the selected column to the peripheral circuit unit 121 via a horizontal transfer line 2300 and also outputs the digital pixel signals to the autonomous exposure processing unit 411 every time a horizontal transfer clock signal is inputted from the outside.

The autonomous exposure processing unit 411 calculates the exposure value indicating the exposure time of the pixel block 200. Specifically, for example, the autonomous exposure processing unit 411 has a pre-processing unit 2311, a controller 2312, and an exposure value computation unit 2313.

The pre-processing unit 2311 acquires digital pixel signals for each pixel column of the pixel block 200 from the column selection circuit 2301. Then, the pre-processing unit 2311 calculates a statistical value for the acquired pixel signals (e.g., the mean, medium, maximum, or minimum). The pre-processing unit 2311 outputs this calculation result to the exposure value computation unit 2313.

The controller 2312 inputs the reset signal to the pre-processing unit 2311 to reset the pre-processing by the pre-processing unit 2311. As a result, the pre-processing unit 2311 calculates the statistical value of the pixel signals from the pixel block 200 for every reset, or in other words, every frame.

The exposure value computation unit 2313 determines the next exposure value on the basis of the calculation result from the pre-processing unit 2311 (the statistical value of the pixel signal). Specifically, for example, the exposure value computation unit determines the next exposure value on the basis of the calculation result to prevent underexposure or overexposure. The exposure value computation unit 2313 retains a first threshold and a second threshold, for example. The first threshold is for determining whether the calculation result indicates an underexposure. The second threshold is greater than the first threshold, and is for determining whether the calculation result indicates an overexposure.

The exposure value computation unit 2313 determines whether the calculation result is within a range from the first threshold to the second threshold. If the calculation result is within the range from the first threshold to the second threshold, then the exposure value computation unit outputs the calculation result as the exposure value to a latch circuit 2321 of the exposure control unit 412. If the calculation result is less than the first threshold, then the exposure value computation unit 2313 outputs the first threshold as the exposure value to the latch circuit 2321 of the exposure control unit 412. If the calculation result exceeds the second threshold, then the exposure value computation unit outputs the second threshold as the exposure value to the latch circuit 2321 of the exposure control unit 412.

Also, the exposure value computation unit 2313 may retain a plurality of different exposure value ranges. In such a case, if the calculation result is within the range from the first threshold to the second threshold, then the exposure value computation unit 2313 outputs a number indicating the exposure value range that includes the calculation result as the exposure value to the latch circuit 2321 of the exposure control unit 412.

If the calculation result is less than the first threshold, then the exposure value computation unit 2313 outputs a number indicating one or more ranges above the exposure value range including the calculation result as the exposure value to the latch circuit 2321 of the exposure control unit 412. If the calculation result exceeds the second threshold, then the exposure value computation unit 2313 outputs a number indicating one or more ranges below the exposure value range that includes the calculation result as the exposure value to the latch circuit 2321 of the exposure control unit 412.

The exposure control unit 412 has the latch circuit 2321, a shift register 2322, a pixel block control unit, and a level shift unit, for example. The latch circuit 2321 retains the exposure value from the autonomous exposure processing unit. The latch circuit 2321 outputs the retained exposure value to the pixel block control unit and the shift register 2322 every time a latch pulse is inputted from the outside.

The shift register 2322 performs parallel/serial conversion of the exposure value from the latch circuit 2321 and outputs the resulting exposure value as a serial signal to the data processing unit.

When the exposure time is calculated in an external system outside of the imaging element 100 and the calculation result is fed back to the imaging element 100, it takes more time for the calculation result to be reflected in the exposure time of the imaging element 100, and power consumption is also increased. By contrast, by providing the autonomous exposure processing unit 411 in the control block 400, it is possible to improve the speed at which the calculation result is reflected in the exposure time of the pixel block 200 and to reduce power consumption.

In FIG. 23, a case was described in which one control block 400 performed exposure control on each pixel block 200, but if the one control block 400 performs exposure control on a plurality of pixel blocks 200, the autonomous exposure processing unit 411 may sequentially select each pixel block 200 from the plurality of pixel blocks 200 in synchronization with the reset signal to calculate the exposure value. A selector is provided on the output side of the exposure value computation unit 2313, and the controller 2312 outputs to the selector a selection signal that selects each of the plurality of pixel blocks 200.

In this case, the exposure control unit 412 has a latch circuit 2321 and a shift register 2322 for each pixel block 200. Each latch circuit 2321 is connected to a selector (not shown) within the autonomous exposure processing unit 411, and upon receiving input of the exposure value from the selector, outputs the retained exposure value to the pixel block control unit 503 and the shift register 2322 every time a latch pulse is inputted. As a result, it is possible to realize autonomous exposure even when one control block 400 performs exposure control on a plurality of pixel blocks 200.

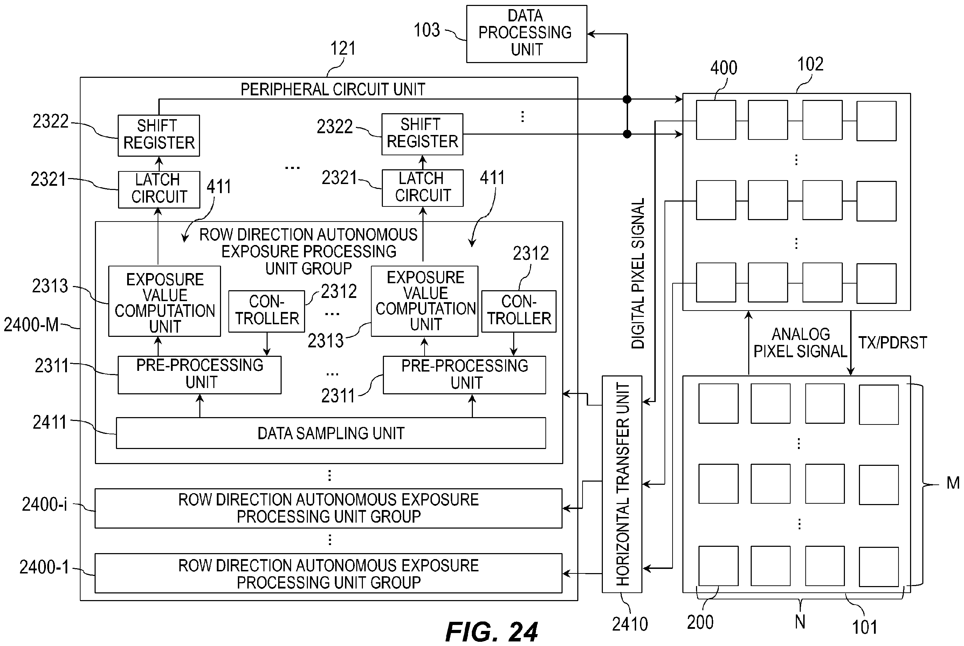

FIG. 24 is a block diagram showing a configuration example of an autonomous exposure control mode 2. The autonomous exposure control mode 2 is a configuration example in which the autonomous exposure processing unit 411 is mounted in the peripheral circuit unit 121. The autonomous exposure processing unit 411 is mounted in the peripheral circuit unit 121 instead of inside the control block. Thus, compared to FIG. 23, the control block 400 can have a smaller circuit size.

The peripheral circuit unit 121 is connected to the pixel unit 101 via a horizontal transfer unit 2410. The horizontal transfer unit 2410 is connected to each pixel block 200 (hereinafter referred to as the pixel block row) arranged in the row direction, and transfers the pixel signals for each pixel block row to the peripheral circuit unit 121. The pixel unit 101 is a collection of M rows by N columns of pixel blocks 200, and thus, the horizontal transfer unit 2410 transfers the pixel signals for each row of M pixel blocks to the peripheral circuit unit 121.

The peripheral circuit unit 121 has row direction autonomous exposure processing unit groups 2400-1 to 2400-M (if not distinguishing therebetween, these are simply referred to as the row direction autonomous exposure processing unit group 2400) for each pixel block. The row direction autonomous exposure processing unit group 2400 has a data sampling unit 2411 and an autonomous exposure processing unit 411 (pre-processing unit 2311, controller 2312, and exposure value computation unit 2313) for N columns of the pixel block. In FIG. 24, N=4, and thus, there are four sets of pre-processing units 2311, controllers 2312, and exposure value computation units 2313.

The data sampling unit 2411 subdivides the pixel signal array of pixel block rows from the horizontal transfer unit 2410 into N equal parts. The data sampling unit 2411 outputs the sampled pixel signal arrays to the corresponding pre-processing units 2311.

As described above, the pre-processing unit 2311 calculates the statistical values of the pixel signals from the corresponding pixel blocks 200. Also, the peripheral circuit unit 121 can be formed at a larger circuit size than the control block 400, and thus, the pre-processing unit 2311 can execute other processes besides calculating the statistical values of the pixel signals.

If, for example, the pre-processing unit 2311 has a memory for storing the pixel number of a defective pixel at the time of manufacturing within the corresponding pixel block 200 and the data sampling unit 2411 samples the pixel signal from said pixel number, then the pre-processing unit 2311 does not use this pixel signal for calculating the statistical values. As a result, it is possible to improve the accuracy of calculating the statistical values of the pixel signals.

Also, the pre-processing unit 2311 may acquire calculation results from another pre-processing unit 2311 that handles the pixel block 200 adjacent to the corresponding pixel block 200, and calculate the statistical values of the pixel signals from the corresponding pixel block 200 on the basis of the calculation results acquired from the other pre-processing unit 2311. As a result, it is possible to smooth the exposed jagged edge of adjacent pixel blocks 200.

Also, the exposure value computation unit 2313 has set thereto the first threshold and the second threshold, but a configuration may be adopted in which the first threshold and/or the second threshold can be modified according to the imaging mode of the imaging device in which the imaging element 100 is installed. As a result, an optimal exposure calculation according to the imaging mode is possible.

Also, the peripheral circuit unit 121 has the latch circuit 2321 and the shift register 2322 for each exposure value computation unit 2313. The shift register 2322 performs parallel/serial conversion of the exposure value from the latch circuit 2321 and outputs the resulting exposure value as a serial signal to the data processing unit 103 and outputs the exposure value to the exposure control unit 412 in the control block 400 corresponding to the pixel block 200.

Thus, according to the configuration shown in FIG. 24, the control block 400 can have a smaller circuit size compared to the configuration depicted in FIG. 23, and it is possible to reduce the size of the corresponding pixel block 200. Therefore, it is possible to increase the number of pixel blocks, enabling more precise autonomous exposure control. Also, the exposure control unit 412 and the pixel driving unit 413 may be installed in the peripheral circuit unit 121. As a result, the control block 400 can have an even smaller circuit size, and it is possible to reduce the size of the corresponding pixel block 200.

FIG. 25 is a block diagram showing a configuration example of an autonomous exposure control mode 3. The autonomous exposure control mode 3 is a configuration example in which the autonomous exposure processing unit 411 is mounted in both the control block 400A and the peripheral circuit unit 121. If executing autonomous exposure control in the control block 400A, this obviates the need for data transmission such as transmission of the pixel signals from the control block 400A to the peripheral circuit unit 121 and transmission of the exposure value from the peripheral circuit unit 121 to the pixel block 200. Thus, feedback to the corresponding pixel block 200 is more rapid compared to a case where the autonomous exposure control is executed by the peripheral circuit unit 121.

Meanwhile, the area of the control block 400A is limited by the dependence thereof on the area of the corresponding pixel block 200, and thus, it is possible to expand the circuit size of the autonomous exposure processing unit 411 if the same is installed in the peripheral circuit unit 121 rather than installed in the control block 400A. Thus, it is possible to provide higher level functionality (e.g., elimination of pixel signals of defective pixels described with reference to fig. 24, control of exposed jagged edge formed with adjacent pixel block 200, calculation of optimal exposure according to imaging mode) for autonomous exposure control if the autonomous exposure processing unit 411 is installed in the peripheral circuit unit 121.

Thus, in the autonomous exposure control mode 3, depending on the state, the imaging element 100 executes autonomous exposure control using the peripheral circuit unit 121 if executing high functionality computation related to autonomous exposure control, and using the control block 400A if providing high speed feedback of the exposure value. In FIG. 25, as an example, in the autonomous exposure control mode 3, autonomous exposure control is executed by the row direction autonomous exposure processing unit group 2400 in the peripheral circuit unit 121, but the imaging element 100 executes autonomous exposure control for each control block 400A if some trigger is applied to the control circuit unit 102.

The imaging element 100 executes autonomous exposure control using the peripheral circuit unit 121 if high functionality computation related to autonomous exposure control is selected by user operation, and using the control block 400A if high speed feedback of the exposure value is selected by user operation. Also, if the remaining battery level is at or below a prescribed level, the imaging element 100 may select and execute the lower power consumption process among the high functionality computation regarding autonomous exposure control and high speed feedback of the exposure value.

The row direction autonomous exposure processing unit group 2400 installed in the peripheral circuit unit 121 is the same as the configuration shown in FIG. 24, and thus, depiction thereof is omitted in FIG. 25.

The column selection circuit 2301 outputs n bits of the digital pixel signal to n OR circuits 2501. In addition to the controller 2312, the autonomous exposure processing unit 2500 in the control block 400A has the n OR circuits 2501, an output data latch circuit 2502, and an n-bit AND circuit 2503.

Upon output of an n-bit signal from the output data latch circuit 2502, the controller 2312 inputs a reset signal to the output data latch circuit 2502.

The OR circuit 2501 is a 2-input 1-output OR circuit. One input of the OR circuit 2501 is connected to the column selection circuit, and the other input is connected to the output of the n-bit AND circuit 2503.

The n OR circuits 2501 are connected to the input of the output data latch circuit 2502. The output data latch circuit 2502 retains an n-bit signal from the n OR circuits 2501. Upon input of a horizontal transfer clock signal, the output data latch circuit 2502 outputs the n-bit signal to the n-bit AND circuit 2503. Also, upon input of the reset signal from the controller 2312, the output data latch circuit 2502 resets the retained n-bit signal and outputs, to the n-bit AND circuit 2503, an n-bit signal in which at least one of the n bits is 0.

The n-bit AND circuit 2503 is an n-input 1-output AND circuit, and the output of the output data latch circuit 2502 is connected to the input of the n-bit AND circuit 2503. The output of the n-bit AND circuit 2503 is connected to the selector 2512 of the exposure control unit 412 and the inputs of the respective OR circuit 2501. If the output from the n-bit AND circuit 2503 is "0," this indicates that the pixel column that outputted the n-bit digital pixel signal is not saturated. If the output from the n-bit AND circuit 2503 is "1," this indicates that the pixel column that outputted the n-bit digital pixel signal is saturated. Below, a 1-bit signal of "1" outputted from the n-bit AND circuit 2503 is referred to as a saturation detection signal.

If the value of the digital pixel signal from a pixel 201 of a pixel column is "1," this indicates that the pixel 201 is saturated. If the values of the n-bit signal from the column selection circuit 2301 are all "1," this indicates that the entire pixel column is saturated. In this case, "1" is inputted to the one input of all of the OR circuits 2501, and thus, the OR circuits 2501 output a 1-bit signal with a value of "1" to the output data latch circuit 2502.

The output data latch circuit 2502 retains the n bit signal indicating that all the values are "1," and upon input of the horizontal transfer clock signal, outputs the retained n-bit signal to the n-bit AND circuit 2503.

If receiving input of an n-bit signal where all values are "1," then the n-bit AND circuit 2503 outputs a saturation detection signal with a value of "1" to the selector 2512 and the OR circuits 2501. As a result, until the reset signal is inputted, the output data latch circuit 2502 outputs the n-bit signal with all values being "1" to the n-bit AND circuit 2503. Thus, the n-bit AND circuit 2503 outputs the saturation detection signal until the reset signal is inputted from the controller 2312 to the output data latch circuit 2502.

The exposure control unit 412 has, in addition to the configuration shown in FIG. 24, the shift register 2511 and the selector 2512. The shift register 2511 performs serial/parallel conversion on the exposure value from the peripheral circuit unit 121, and outputs the result to the level shift unit 504 and the selector 2512.

The selector 2512 receives input of the exposure value from the shift register 2511 and the set exposure value. The selector 2512 selects the exposure value from the shift register 2511 or the set exposure value on the basis of the output signal from the n-bit AND circuit 2503, and outputs the selected exposure value to the latch circuit 2321. The set exposure value is an exposure value corresponding to an exposure time at which the pixels 201 are not saturated, and is set such that the exposure time is at a minimum, for example.

The set exposure value is set by being calculated by an external system outside of the control block 400A, for example. The set exposure value may be a fixed value and may be selected from the external system. The external system is an image processing unit that is connected to the peripheral circuit unit 121 in the imaging element 100, the data processing unit 103 of the third semiconductor substrate 130, or the imaging element 100 in the imaging device having the imaging element 100.

Specifically, if the output signal from the n-bit AND circuit 2503 is not a saturation detection signal, for example, the selector 2512 selects an exposure value from the shift register 2511 and outputs the same to the latch circuit 2321. On the other hand, if the output signal from the n-bit AND circuit 2503 is a saturation detection signal, the selector 2512 selects the set exposure value and outputs the same to the latch circuit 2321.

The autonomous exposure processing unit 2500 and the exposure control unit 412 in the control block 400A execute autonomous exposure control using the exposure value from the peripheral circuit unit 121 until saturation is detected in the control block 400A. If saturation is detected in the control block 400A, the set exposure value within the exposure control unit 412 is used to execute autonomous exposure control.

As a result, it is possible to select between a process of setting a high accuracy exposure value according to the exposure value from the peripheral circuit unit 121 for non-saturated pixel columns, and a process enabling simple and highspeed feedback of switching to the set exposure value such that the saturation state of the pixel column becomes non-saturated.

The autonomous exposure processing unit 2500 in the control block 400 may be the autonomous exposure processing unit 411 shown in FIG. 23. In this case, a configuration may be adopted to allow user operation to select between the autonomous exposure processing unit 411 in the peripheral circuit unit 121 and the autonomous exposure processing unit 411 in the control block 400, for example.

The imaging device in which the imaging element 100 is installed may select between the autonomous exposure processing unit 411 in the peripheral circuit unit 121 and the autonomous exposure processing unit 411 in the control block 400, on the basis of the remaining battery level, for example. In this case, the imaging device may select the autonomous exposure control by the autonomous exposure processing unit 411 in the peripheral circuit unit 121 if the battery level is at or above a prescribed value, and select the autonomous exposure control by the autonomous exposure processing unit 411 in the control block 400 if the battery level is not at or above the prescribed value. Also, if high quality imaging is desired, the user would select the autonomous exposure processing unit 411 in the peripheral circuit unit 121, and if reduced power consumption is desired, the user would select the autonomous exposure processing unit 411 in the control block 400.

### <Stopping Circuit Operation at Level of Control Block 400>

Next, stopping a circuit operation at the level of the control block 400 will be described. In the description below, if not distinguishing between the imaging elements 100A and 100B, the reference character 100 is used for the imaging element, and if not distinguishing between the control blocks 400A and 400B, the reference character 400 is used for the control block.

The imaging element 100 can perform exposure control by the control blocks 400 corresponding respectively to the pixel blocks 200. As described with reference to FIG. 12, the imaging element 100 has a frame skip function of skipping control by the transfer control signal ϕTX using the transfer selection control signal cpTXSEL, resulting in a long exposure. The imaging element 100 enables long exposure exceeding the exposure time for one frame (1-frame exposure) by the frame skip function, and can be used for a low-frame rate operation (60fps) such as for a live view. In a control block 400 subjected to frame skipping, A/D conversion is executed for each frame but a light signal is not read, and thus, a pseudo signal is outputted. By stopping the output operation of the pseudo signal, it is possible to reduce noise resulting from the pseudo signal and to reduce power consumption of the control block 400.

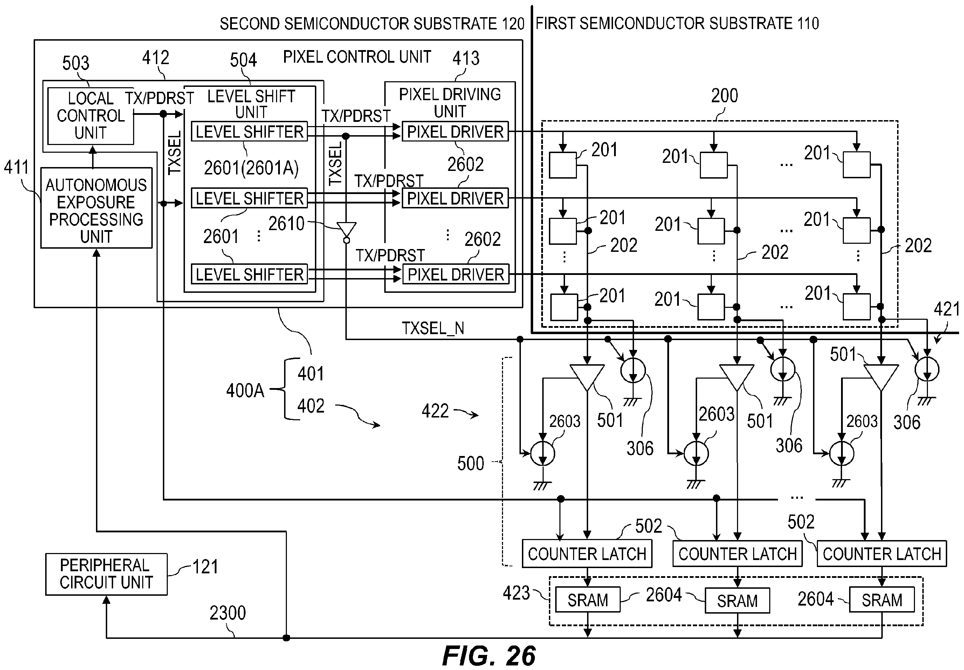

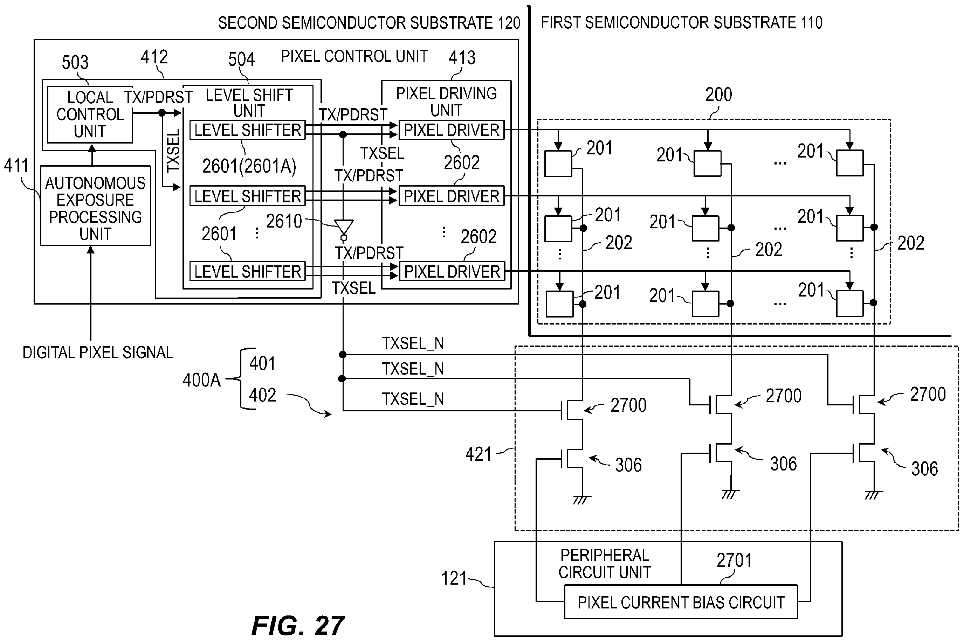

FIG. 26 is a descriptive view showing a circuit configuration example of the interior of the control block 400. In FIG. 26, the control block 400A is the described example. In the case of the control block 400B, the signal input unit 421, the signal conversion unit 422, and the signal output unit 423 are not included in the control block 400B, and are disposed on the second semiconductor substrate 120 as the signal processing unit 1602 (similarly applies to FIGs. 27 to 29).

The pixel control unit 401 has the pixel block control unit 503 and the level shift unit 504 inside the exposure control unit 412. The level shift unit 504 has a level shifter 2601 for each pixel row in the pixel block 200. The pixel driving unit 413 has a pixel driver 2602 for each pixel row in the pixel block 200.

The pixel block control unit 503 outputs the transfer control signal ϕTX or the discharge control signal cpPDRST to the level shift unit 504. The pixel block control unit 503 outputs the transfer selection control signal cpTXSEL to the level shift unit 504 if the transfer selection control signal cpTXSEL is inputted from the global driving unit 600 in the peripheral circuit unit 121, or in other words, when a frame skip operation is being performed.

Each level shifter 2601 raises the voltage of the transfer control signal ϕTX or the discharge control signal cpPDRST to the voltage level of the pixel block 200, and outputs the resulting signal to the pixel driving unit 413. Each level shifter 2601 raises the voltage of the transfer selection control signal cpTXSEL to the voltage level of the pixel block 200, and outputs the resulting signal to the pixel driving unit 413.

Each pixel driver 2602 performs drive control of the pixels 201 in the pixel column as shown in FIG. 12 on the basis of the transfer control signal ϕTX or the discharge control signal cpPDRST and the transfer selection control signal cpTXSEL from the level shifter 2601 of the same pixel row.

The digital pixel signal from each counter latch that is an example of the storage unit 502 (hereinafter, the counter latch 502) is retained in the SRAM 2604 of each pixel column in the signal output unit 423, is outputted to the peripheral circuit unit 121 via the horizontal transfer line 2300, and is outputted to the autonomous exposure processing unit 411 by the column selection circuit 2401.

Next, a configuration for stopping a circuit operation using the level shifter 2601 and the pixel block control unit 503 will be described.

A given level shifter 2601 (e.g., the level shifter 2601A) is connected to the load current source 306 of each pixel column in the pixel block 200 via an inverter 2610. In order to stop the circuit operation of the load current source 306 of each pixel column in the pixel block 200, the level shifter 2601A outputs an inverted signal cpTXSEL_N of the transfer selection control signal cpTXSEL, the voltage of which was raised, to each load current source 306 (will be described later with reference to FIG. 27).

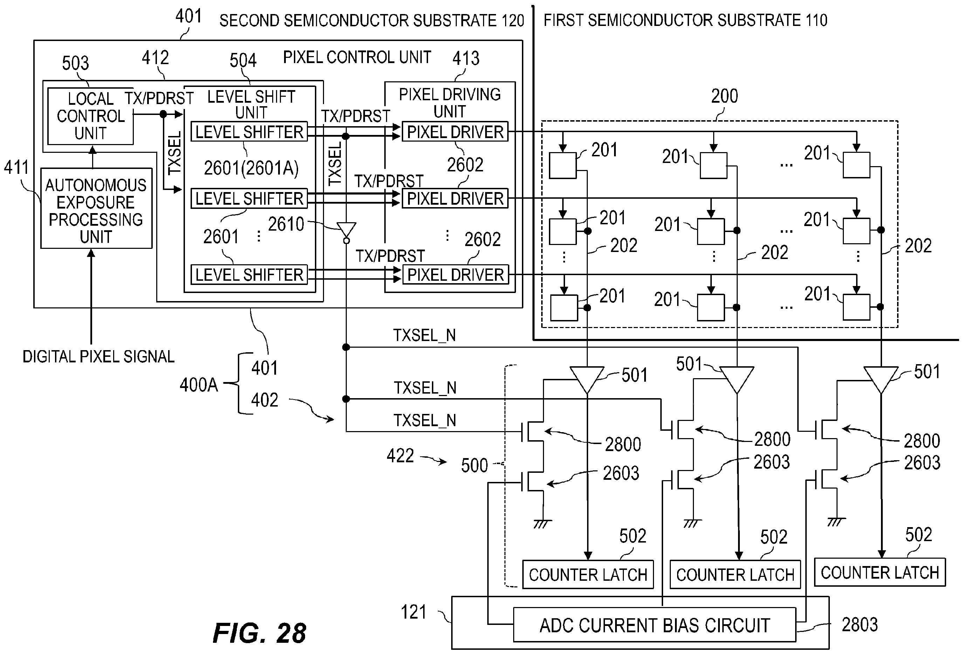

This level shifter 2601A is connected to the ADC current source 2603 of each pixel column in the pixel block 200 via the inverter 2610. In order to stop the circuit operation of the ADC current source 2603 of each pixel column in the pixel block 200, the level shifter 2601A outputs the inverted signal cpTXSEL_N of the transfer selection control signal cpTXSEL, the voltage of which was raised, to each ADC current source 2603 (will be described later with reference to FIG. 28).

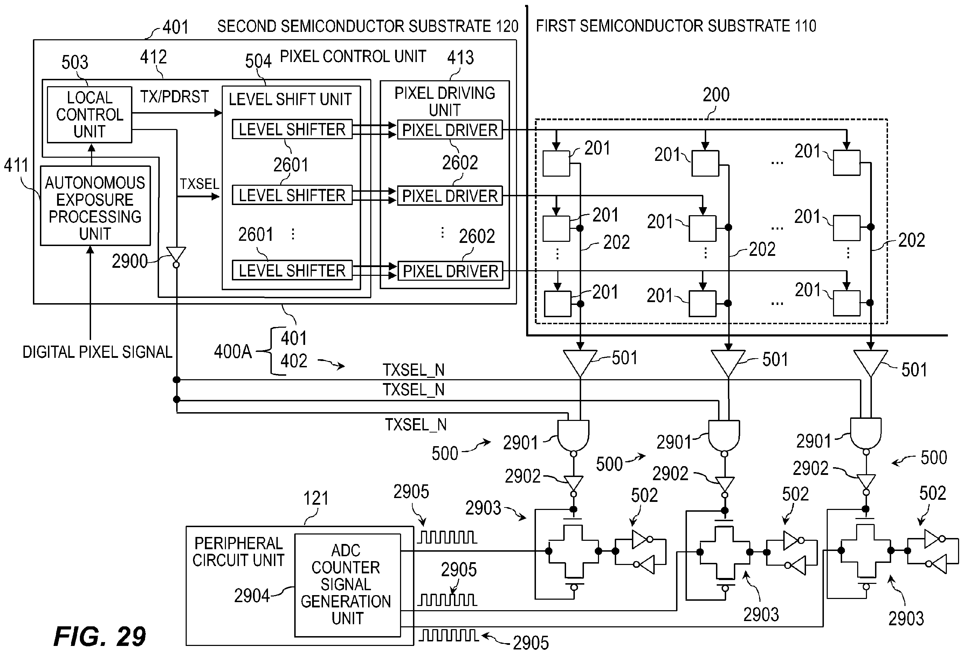

Also, the pixel block control unit 503 is connected to each counter latch 502. In order to stop the circuit operation of the counter latch 502 of each pixel column in the pixel block 200, the pixel block control unit 503 outputs the transfer selection control signal cpTXSEL to each counter latch 502 (will be described later with reference to FIG. 29).

### [Circuit Operation Stoppage Example 1 at Level of Control Block 400]

FIG. 27 is a descriptive view showing a circuit operation stoppage example 1 at the level of the control block 400. The circuit operation stoppage example 1 at the level of the control block 400 is a circuit operation stoppage example of the load current source 306 of each pixel column.

The signal input unit 421 has the load current source 306 and an adjustment unit 2700 for each pixel column in the pixel block 200. The load current source 306 is constituted of an n-type MOS transistor, for example, and supplies the bias current inputted from the gate terminal to the signal line 202.

The adjustment unit 2700 is constituted of an n-type MOS transistor, for example, and adjusts the current supplied to the pixel column from the load current source 306. The gate terminal of the adjustment unit 2700 is connected to the level shifter 2601A in the pixel control unit 401 via the inverter 2610. The inverter 2610 outputs the inverted signal cpTXSEL_N upon output of the transfer selection control signal cpTXSEL indicating a frame skip operation from the level shifter 2601A.

The peripheral circuit unit 121 has a pixel current bias circuit 2701. The pixel current bias circuit 2701 is connected to the gate terminal of the load current source 306 of each pixel column in the pixel block 200, and supplies the bias current. As a result, the load current source 306 supplies the bias current to the signal line 202.

The pixel control unit 401 controls the supply of current to the pixel column from the load current source 306 by the transfer selection control signal cpTXSEL from the level shifter 2601A. Specifically, the pixel control unit 401 controls the connection between the pixel column and the load current source 306. If, for example, the transfer selection control signal cpTXSEL is inputted to the gate terminal of the adjustment unit 2700, the value of the current of the adjustment unit 2700 would be greater than if the inverted signal cpTXSEL_N were inputted, causing the pixel column to be connected to the load current source 306 (ON state) and current to be supplied from the load current source 306 to the pixel column.

On the other hand, if the inverted signal cpTXSEL_N is inputted to the gate terminal of the adjustment unit 2700, the value of the current of the adjustment unit 2700 would be less than if the transfer selection control signal cpTXSEL were inputted, causing the pixel column to be disconnected from the load current source 306 (OFF state) and stopping the current supply from the load current source 306 to the pixel column.

In this manner, it is possible to reduce power consumption of the load current source 306 at the control block 400 level. Also, by stopping the supply of current from the load current source 306 to the pixel column when performing the frame skip operation, the pseudo signal from the pixels 201 is not outputted. Thus, no pseudo signal is superimposed on the outputted image data, thereby enabling a reduction in noise.

### [Circuit Operation Stoppage Example 2 at Level of Control Block 400]

FIG. 28 is a descriptive view showing a circuit operation stoppage example 2 at the level of the control block 400. The circuit operation stoppage example 2 at the level of the control block 400 is a circuit operation stoppage example of the comparators 501 of each pixel column.

The ADC current source 2603 of each pixel column of the pixel block 200 has the ADC current source 2603 and an adjustment unit 2800. The ADC current source 2603 is constituted of an n-channel MOSFET, for example, and supplies the bias current inputted from the gate terminal to the comparator 501.

The adjustment unit 2800 is constituted of an n-channel MOSFET, for example, and adjusts the current supplied to the comparator 501 from the ADC current source 2603. The gate terminal of the adjustment unit 2800 is connected to the level shifter 2601A in the pixel control unit 401 via the inverter 2610.

The peripheral circuit unit 121 has an ADC current bias circuit 2801. The ADC current bias circuit 2801 is connected to the gate terminal of the ADC current source 2603, and supplies the bias current. As a result, the ADC current source 2603 supplies the bias current to the comparator 501.

The pixel control unit 401 controls the supply of current to the comparators 501 from the ADC current sources 2603 by the transfer selection control signal cpTXSEL from the level shifter 2601A. Specifically, the pixel control unit 401 controls the connection between the comparator 501 and the ADC current source 2603. If, for example, the transfer selection control signal cpTXSEL is inputted to the gate terminal of the adjustment unit 2800, the value of the current of the adjustment unit 2800 would be greater than if the inverted signal cpTXSEL_N were inputted, causing the comparator 501 to be connected to the ADC current source 2603 (ON state) and current to be supplied from the ADC current source 2603 to the comparator 501.

On the other hand, if the inverted signal cpTXSEL_N is inputted to the gate terminal of the adjustment unit 2800, the value of the current of the adjustment unit 2800 would be less than if the transfer selection control signal cpTXSEL were inputted, causing the comparator 501 be disconnected from the ADC current source 2603 (OFF state) and stopping the current supply from the ADC current source 2603 to the comparator 501. As a result, A/D conversion is not executed during the frame skip operation.

In this manner, it is possible to reduce power consumption of the load current source 306 at the control block 400 level. Also, by stopping the supply of current from the ADC current source 2603 to the comparator 501 when performing the frame skip operation, the pseudo signal from the pixels 201 is not outputted. Thus, no pseudo signal is superimposed on the outputted image data, thereby enabling a reduction in noise.

### [Circuit Operation Stoppage Example 3 at Level of Control Block 400]

FIG. 29 is a descriptive view showing a circuit operation stoppage example 3 at the level of the control block 400. The circuit operation stoppage example 3 at the level of the control block 400 is a circuit operation stoppage example of the counter latches 502 of each pixel column.

The control block 400A has a NAND circuit 2901, an inverter 2902, and a transfer circuit 2903 between the comparator 501 and the counter latch 502 in the ADC 500 of the signal line 202 of each pixel column. The NAND circuit 2901 receives input of the output signal from the comparator 501. Also, the NAND circuit 2901 receives input of the inverted signal cpTXSEL_N yielded by the inverter 2900 inverting the transfer selection control signal cpTXSEL from the pixel block control unit 503. The transfer selection control signal cpTXSEL serves as an enable signal that controls the output of the NAND circuit 2901. Also, the inverter 2902 inverts the output signal from the NAND circuit 2901 and outputs the resulting inverted signal.

The transfer circuit 2903 has a circuit configuration in which an n-type MOS transistor and a p-type MOS transistor are connected in parallel, and the gate terminals of the n-type MOS transistor and the p-type MOS transistor are connected to the output terminal of the inverter 2902. Also, the transfer circuit 2903 is connected between an ADC counter signal generation unit 2904 of the peripheral circuit unit 121 and the counter latch 502.

The ADC counter signal generation unit 2904 outputs an ADC counter signal 2905 to the counter latch 502. The counter latch 502 stores the digital pixel signal and outputs the same to the SRAM 2604 according to the ADC counter signal 2905. The transfer circuit 2903 supplies the ADC counter signal 2905 to the counter latch 502 or stops supply thereof on the basis of the output value of the inverter 2902.

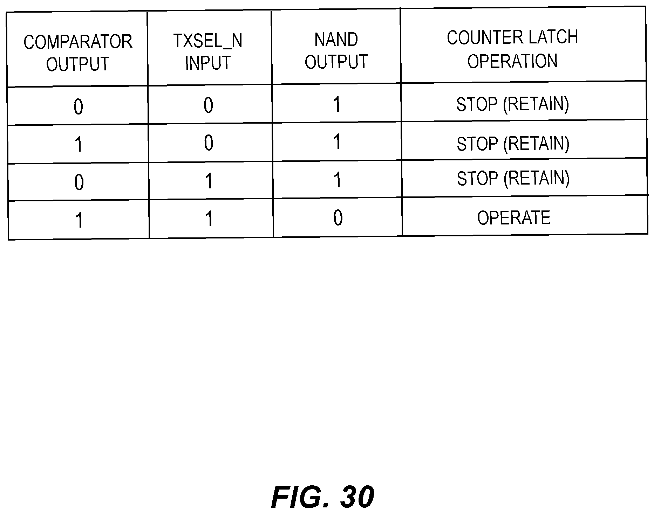

FIG. 30 is a truth table of the NAND circuit 2901. When the output value of the NAND circuit 2901 is "0," the output value of the inverter 2902 is "1," and the transfer circuit 2903 supplies the ADC counter signal 2905 to the counter latch 502 until the output value of the inverter 2902 inverts to "0."

On the other hand, when the output value of the NAND circuit 2901 is "1," the output value of the inverter 2902 is "0," and the transfer circuit 2903 stops supply of the ADC counter signal 2905 to the counter latch 502. As a result, the counter latch 502 continues to retain the output signal from the comparator 501.

That is, when the inverted signal cpTXSEL_N is inputted to the NAND circuit 2901, the counter latch 502 operates (transfers the signal to the SRAM 2404) or stops operation (retains the signal in the counter latch 502) according to the output of the comparator 501. On the other hand, when the enable signal (transfer selection control signal cpTXSEL) is inputted, the operation of the counter latch 502 stops (the signal is retained in the counter latch 502) regardless of the output of the comparator 501.

In this manner, it is possible to reduce power consumption of the counter latch 502 at the control block 400 level. Also, by stopping the counter latch 502 when performing the frame skip operation, the pseudo signal from the pixels 201 is not outputted. Thus, no pseudo signal is superimposed on the outputted image data, thereby enabling a reduction in noise.

Therefore, by stopping the circuit operation when not reading the pixel signal, it is possible to reduce power consumption. In particular, it is possible to reduce power consumption by stopping the current in the control block 400 during an exposure time exceeding a 1-frame exposure. Also, even with an exposure time within a 1-frame exposure, it is possible to reduce power consumption by stopping the current in the control block 400 controlling a non-focal pixel block 200 when reading only from a focal pixel block 200, or in other words, when performing a socalled "window readout."

Also, a pseudo signal (circuit noise) is not superimposed on the output from the pixel block 200 for which the frame skip operation was performed, thereby avoiding negative impacts on image quality when adding or computing a plurality of images. In the description above, the type of circuit to be stopped can be at least one of the load current source 306, the comparator 501, and the counter latch 502, but it would be possible to further mitigate a decrease in image quality while reducing power consumption the greater the number of types of circuits to be stopped is.

Also, in FIGs. 26 to 30, upon input of the transfer selection control signal cpTXSEL, each of the control blocks 400 executes the frame skip operation and stoppage of circuit operations for the corresponding pixel block 200, and as shown in FIG. 6, the transfer selection control signal cpTXSEL is inputted at the same timing to a plurality of the control blocks 400 in the same block row. Thus, the frame skip operation and the stoppage of circuit operations are executed simultaneously for a plurality of the pixel blocks 200 in the same corresponding block row.

In FIGs. 26 to 28, examples are shown in which the level shift unit 504 is connected to the adjustment units 2700 and 2800, but the adjustment units 2700 and 2800 may alternatively be connected to the pixel block control unit 503 instead of the level shift unit 504. Also, in FIGs. 26 and 29, examples are shown in which the pixel block control unit 503 is connected to the counter latch 502, but the counter latch 502 may alternatively be connected to the level shift unit 504 instead of the pixel block control unit 503.

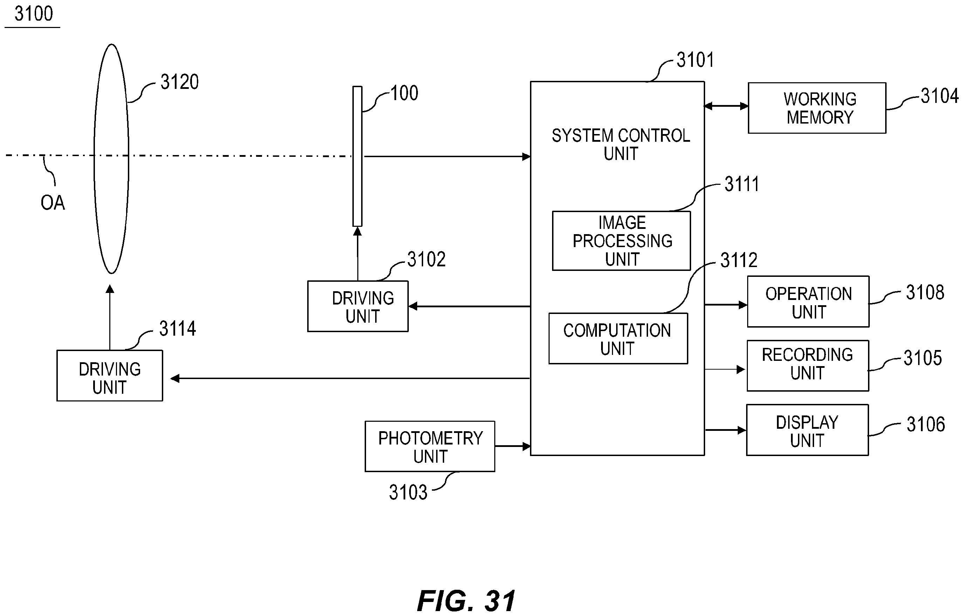

FIG. 31 is a block diagram showing a configuration example of an imaging device 3100 according to an embodiment. The imaging device 3100 includes an imaging element 100, a system control unit 3101, a driving unit 3102, a photometry unit 3103, a working memory 3104, a recording unit 3105, a display unit 3106, an operation unit 3108, a driving unit 3114, and an imaging lens 3120.

The imaging lens 3120 guides a subject light beam entering along an optical axis OA towards the imaging element 100. The imaging lens 3120 is constituted of a plurality of optical lens groups, and causes the subject light beam from the scene to form an image near the focal plane. The imaging lens 3120 may be an interchangeable lens that can be installed to or removed from the imaging device 3100. In FIG. 31, one imaginary lens disposed near a pupil is shown as a representation of the imaging lens 3120.

The driving unit 3114 drives the imaging lens 3120. The driving unit 3114 changes the focal position by moving the optical lens groups of the imaging lens 3120, for example. The driving unit 3114 may drive an iris diaphragm in the imaging lens 3120 to control the quantity of the subject light beam entering the imaging element 100.

The driving unit 3102 has a control circuit that controls the timing of the imaging element 100 and controls the accumulation of electric charge through regional control or the like according to instructions from the system control unit 3101. Also, the operation unit 3108 receives instructions from the photographer/videographer through a shutter release button or the like.

The imaging element 100 delivers the pixel signal to the image processing unit 3111 of the system control unit 3101. The image processing unit 3111 generates image data subjected to various types of image processing, with the working memory 3104 as the workspace. If generating an image data in JPEG file format, for example, after generating a color image signal from a signal acquired as a Bayer array, the color image signal is compressed. The generated image data is recorded in the recording unit 3105, is converted to a display signal, and then is displayed in the display unit 3106 for a preset time.

The photometry unit 3103 detects the luminance distribution of a scene prior to an imaging sequence for generating image data. The photometry unit 3103 includes an AE sensor with approximately 1 million pixels, for example. A computation unit 3112 of the system control unit 3101 calculates the luminance for each region of a scene by receiving the output from the photometry unit 3103.

The computation unit 3112 determines the shutter speed, the aperture, and the ISO speed according to the calculated luminance distribution. The photometry unit 3103 may also be used by the imaging element 100. The computation unit 3112 also executes various computations for operating the imaging device 3100. The driving unit 3102 may be installed partially or entirely in the imaging element 100. A portion of the system control unit 3101 may be installed in the imaging element 100.

The present invention is not limited to the content above, and the content above may be freely combined. Also, other aspects considered to be within the scope of the technical concept of the present invention are included in the scope of the present invention.

### Description of Reference Characters

- 100, 100A, 100B: imaging element
- 101: pixel unit
- 102: control circuit unit
- 103: data processing unit
- 110: first semiconductor substrate
- 120: second semiconductor substrate
- 121: peripheral circuit unit
- 130: third semiconductor substrate
- 200: pixel block
- 201: pixel
- 202: signal line
- 210: pixel group
- 300: photoelectric conversion unit
- 301: transfer unit
- 302: discharge unit
- 304: reset unit
- 305: pixel output unit
- 306: load current source
- 310: read unit
- 351: amplification unit
- 352: selection unit
- 400, 400A, 400B: control block
- 401: pixel control unit
- 402: signal transfer unit
- 411: autonomous exposure processing unit
- 412: exposure control unit
- 413: pixel driving unit
- 421: signal input unit
- 422: signal processing unit
- 423: signal output unit

## Claims

1. An imaging element, comprising:
a first semiconductor substrate having a plurality of pixels arranged in a row direction; and
a second semiconductor substrate having a first load current source configured to supply a current to a first pixel among the plurality of pixels, a second load current source configured to supply a current to a second pixel among the plurality of pixels, a first pixel control unit configured to control supply of the current to the first pixel by the first load current source, and a second pixel control unit configured to control supply of the current to the second pixel by the second load current source.

2. The imaging element according to claim 1,
wherein the first pixel control unit is configured to control a connection between the first pixel and the first load current source, and
wherein the second pixel control unit is configured to control a connection between the second pixel and the second load current source.

3. The imaging element according to claim 1, further comprising:
a first adjustment unit configured to adjust the current supplied to the first pixel by the first load current source; and
a second adjustment unit configured to adjust the current supplied to the second pixel by the second load current source,
wherein the first pixel control unit is configured to control the first adjustment unit, and
wherein the second pixel control unit is configured to control the second adjustment unit.

4. The imaging element according to claim 3,
wherein the first adjustment unit is configured to adjust the current supplied to the first pixel by the first load current source on the basis of a signal from the first pixel control unit, and
wherein the second adjustment unit is configured to adjust the current supplied to the second pixel by the second load current source on the basis of a signal from the second pixel control unit.

5. The imaging element according to claim 3 or 4,
wherein the first adjustment unit is connected to the first pixel and the first load current source, and
wherein the second adjustment unit is connected to the second pixel and the second load current source.

6. The imaging element according to any one of claims 1 to 5, further comprising:
a first conversion unit configured to convert a first signal read from the first pixel to a digital signal; and
a second conversion unit configured to convert a second signal read from the second pixel to a digital signal.

7. The imaging element according to claim 6,
wherein the first pixel control unit is configured to control the supply of the current to the first conversion unit, and
wherein the second pixel control unit is configured to control the supply of the current to the second conversion unit.

8. The imaging element according to claim 6 or 7,
wherein the first conversion unit has a first comparator to which the first signal is inputted,
wherein the second conversion unit has a second comparator to which the second signal is inputted,
wherein the first pixel control unit is configured to control the supply of the current to the first comparator, and
wherein the second pixel control unit is configured to control the supply of the current to the second comparator.

9. The imaging element according to any one of claims 6 to 8,
wherein the first conversion unit has a first latch circuit to which a first clock signal is inputted,
wherein the second conversion unit has a second latch circuit to which a second clock signal is inputted,
wherein the first pixel control unit is configured to control input of the first clock signal to the first latch circuit, and
wherein the second pixel control unit is configured to control input of the second clock signal to the second latch circuit.

10. The imaging element according to any one of claims 1 to 9,
wherein the first pixel has a first photoelectric conversion unit configured to convert light to an electric charge,
wherein the second pixel has a second photoelectric conversion unit configured to convert light to an electric charge,
wherein the first pixel control unit is configured to control the supply of the current to the first pixel on the basis of a control signal that controls an accumulation time over which the electric charge obtained by conversion by the first photoelectric conversion unit accumulates, and
wherein the second pixel control unit is configured to control the supply of the current to the second pixel on the basis of a control signal that controls an accumulation time over which the electric charge obtained by conversion by the second photoelectric conversion unit accumulates.

11. The imaging element according to claim 10,
wherein the first pixel has a first transfer unit is configured to transfer the electric charge obtained by conversion by the first photoelectric conversion unit,
wherein the second pixel has a second transfer unit configured to transfer the electric charge obtained by conversion by the second photoelectric conversion unit,
wherein the first pixel control unit is configured to control the supply of the current to the first pixel on the basis of a control signal that controls the first transfer unit, and
wherein the second pixel control unit is configured to control the supply of the current to the second pixel on the basis of a control signal that controls the second transfer unit.

12. The imaging element according to claim 11,
wherein the first transfer unit is connected to a first transfer control line to which a first transfer control signal for transferring the electric charge obtained by conversion by the first photoelectric conversion unit is outputted, and
wherein the second transfer unit is connected to a second transfer control line to which a second transfer control signal for transferring the electric charge obtained by conversion by the second photoelectric conversion unit is outputted.

13. The imaging element according to claim 12,
wherein the first transfer control signal is outputted from the first pixel control unit, and
wherein the second transfer control signal is outputted from the second pixel control unit.

14. The imaging element according to any one of claims 10 to 13,
wherein the first pixel has a first discharge unit is configured to discharge the electric charge of the first photoelectric conversion unit,
wherein the second pixel has a second discharge unit configured to discharge the electric charge of the second photoelectric conversion unit,
wherein the first pixel control unit is configured to control the supply of the current to the first pixel on the basis of a control signal that controls the first discharge unit, and
wherein the second pixel control unit is configured to control the supply of the current to the second pixel on the basis of a control signal that controls the second discharge unit.

15. The imaging element according to claim 14,
wherein the first discharge unit is connected to a first discharge control line to which a first discharge control signal for discharging the electric charge of the first photoelectric conversion unit is outputted, and
wherein the second discharge unit is connected to a second discharge control line to which a second discharge control signal for discharging the electric charge of the second photoelectric conversion unit is outputted.

16. The imaging element according to claim 15,
wherein the first discharge control signal is outputted from the first pixel control unit, and
wherein the second discharge control signal is outputted from the second pixel control unit.

17. The imaging element according to any one of claims 1 to 16,
wherein the first pixel is disposed in a first pixel block in the first semiconductor substrate,
wherein the second pixel is disposed in a second pixel block in the first semiconductor substrate,
wherein the first pixel control unit is disposed in a first control block in the second semiconductor substrate,
wherein the second pixel control unit is disposed in a second control block in the second semiconductor substrate,
wherein the first pixel block and the first control block oppose each other, and
wherein the second pixel block and the second control block oppose each other.

18. An imaging device, comprising:
the imaging element according to any one of claims 1 to 17.

19. An imaging element, comprising:
a first semiconductor substrate having a plurality of pixel blocks including at least one pixel; and
a second semiconductor substrate having a control block disposed for each of the pixel blocks,
wherein the control block has a pixel control unit is configured to control a load current source that supplies a current to the pixel included in a corresponding pixel block among the plurality of pixel blocks.

20. The imaging element according to claim 19,
wherein the control block has a conversion unit is configured to convert to a digital signal the signal read from the pixel included in the corresponding pixel block among the plurality of pixel blocks.

21. The imaging element according to claim 19,
wherein the second semiconductor substrate has a conversion unit configured to convert the signal read from the pixel to a digital signal, and
wherein the conversion unit is disposed on the second semiconductor substrate outside of a control circuit unit in which the plurality of control blocks are disposed.

22. The imaging element according to any one of claims 19 to 21,
wherein the pixel control unit is configured to control a connection between the pixel included in the corresponding pixel block among the plurality of pixel blocks and a load current source that supplies a current to the pixel included in the corresponding pixel block among the plurality of pixel blocks.

23. The imaging element according to any one of claims 19 to 22,
wherein the pixel has a photoelectric conversion unit that converts light to an electric charge, and
wherein the pixel control unit is configured to control the supply of the current to the pixel on the basis of a control signal that controls an accumulation time over which the electric charge obtained by conversion by the photoelectric conversion unit accumulates.

24. The imaging element according to claim 23,
wherein the pixel has a transfer unit is configured to transfer the electric charge obtained by conversion by the photoelectric conversion unit, and
wherein the pixel control unit is configured to control the supply of the current to the pixel on the basis of a control signal that controls the transfer unit.

25. The imaging element according to claim 24,
wherein the transfer unit is connected to a transfer control line to which a transfer control signal for transferring the electric charge obtained by conversion by the photoelectric conversion unit is outputted, and
wherein the transfer control signal is outputted from the pixel control unit.

26. The imaging element according to any one of claims 23 to 25,
wherein the pixel has a discharge unit configured to discharge the electric charge of the photoelectric conversion unit, and
wherein the pixel control unit is configured to control the supply of the current to the pixel on the basis of a control signal that controls the discharge unit.

27. The imaging element according to claim 26,
wherein the discharge unit is connected to a discharge control line to which a discharge control signal for discharging the electric charge of the photoelectric conversion unit is outputted.

28. The imaging element according to claim 27,
wherein the discharge control signal is outputted from the pixel control unit.

29. An imaging device, comprising:
the imaging element according to any one of claims 19 to 28.
